# EUROPÄISCHE PATENTANMELDUNG

(11) **EP 3 825 864 A1**
(43) Veröffentlichungstag der Anmeldung: **26.05.2021**
(21) Anmeldenummer: 19210488.3
(22) Anmeldetag: 20.11.2019
(51) Int. Cl.: G06F 16/22, G06F 16/27

(54) **VERFAHREN UND ZUGEHÖRIGES COMPUTERSYSTEM ZUM ERZEUGEN VON DATEN EINER DATENSTRUKTUR**

(71) Anmelder: Akarion AG, 81675 München (DE)
(72) Erfinder: Maschek, Sascha, 4040 Linz (AT); Emathinger, Paul, 4020 Linz (AT)
(74) Vertreter: Gruner, Leopold Joachim

(57) **Zusammenfassung**

Die vorliegende Erfindung bezieht sich auf ein Verfahren zum Erzeugen von Daten innerhalb einer Datenstruktur, ein Verfahren zum Löschen eines Datenelements aus einer Datenstruktur, ein Verfahren zum Verifizieren von Daten innerhalb einer Datenstruktur und ein Verfahren zum systematischen Erhalt der Integrität einer Datenstruktur. Die Erfindung bezieht sich auch auf computerbasierte Vorrichtungen, welche diese Verfahren bzw. die einzelnen Verfahrensschritte darin ausführen bzw. zum Einsatz bringen, auf ein Verfahren zum Einrichten eines Computers, Computernetzwerks oder Computersystems, ein Computerprogramm sowie ein computerlesbares Medium mit computerausführbaren Anweisungen.

## Beschreibung

### Gebiet der Erfindung

Die vorliegende Erfindung bezieht sich im Allgemeinen auf mehrere zueinander in einem Wechselwirkungsverhältnis stehende Verfahren und entsprechende computerbasierte Vorrichtungen. Die Erfindung bezieht sich dabei insbesondere auf ein Verfahren zum Erzeugen von Daten innerhalb einer Datenstruktur, die in einem Medium oder System gespeichert oder gesichert werden können, ein Verfahren zum Löschen eines Datenelements aus einer Datenstruktur, ein Verfahren zum Verifizieren von Daten innerhalb einer Datenstruktur und ein Verfahren zum systematischen Erhalt der Integrität einer Datenstruktur. Die Erfindung bezieht sich auch auf computerbasierte Vorrichtungen, welche diese Verfahren bzw. die einzelnen Verfahrensschritte darin ausführen bzw. zum Einsatz bringen, auf ein Verfahren zum Einrichten eines Computers, Computernetzwerks oder Computersystems, ein Computerprogramm sowie ein computerlesbares Medium mit computerausführbaren Anweisungen.

### Technischer Hintergrund

Die vorliegende Erfindung bezieht sich auf das technische Gebiet der Datenverarbeitung. Auf diesem technischen Gebiet der Datenverarbeitung sind verschiedene Techniken aus dem Stand der Technik bekannt.

Aus dem Stand der Technik ist eine Technik bekannt, bei der aus Daten ein sogenannter Streuwert (Hash oder Hashwert) berechnet wird. Regelmäßig kommt dabei eine sogenannte Streuwertfunktion (Hashfunktion) zum Einsatz. Eine solche Hashfunktion wird im Stand der Technik beispielsweise durch den sicheren Hash-Algorithmus (SHA, secure hash algorithm) bereitgestellt. Mit einer Hashfunktion kann häufig ein in seiner Größe nicht notwendigerweise beschränkter Datenblock auf einen Datenblock fester Größe, den Hash oder Hashwert, abgebildet werden. Eine typische Länge für einen Hash ist beispielsweise 256 bit. Eine wünschenswerte Eigenschaft einer guten kryptologischen Hashfunktion ist eine näherungsweise Injektivität und eine dadurch erzielte näherungsweise Kollisionsresistenz. Die "ideale Hashfunktion" ist daher vollständig linkseindeutig und kollisionsfrei und bildet unterschiedliche Eingangsdaten immer auf unterschiedliche Hashes ab.

In einem typischen Anwendungsfall für eine Hashfunktion wird ein Hashwert für eine größere Datenmenge berechnet. Beispielsweise soll eine größere Datenmenge über ein möglicherweise nicht sicheres Übertragungsmedium, wie das Internet, übertragen werden. Zum Beispiel kann durch einen technischen Fehler ein Teil der Daten falsch übertragen werden oder ein Dritter manipuliert diese Daten.

Wenn der Sender der Daten ihren Hashwert berechnet und diesen Hashwert dem Empfänger zur Verfügung stellt, kann der Empfänger die Echtheit und Unverfälschtheit der Daten verifizieren, vorausgesetzt der Hashwert selbst ist echt und verlässlich.

Das Verfahren bringt jedoch den Nachteil mit sich, dass das Verfahren völlig außer Kraft gesetzt wird, wenn der Hashwert selbst manipuliert wird. In einem Beispiel überträgt ein Benutzer A (z. B. Alice) an einen Benutzer B (z. B. Bob) eine Datei und außerdem den Hashwert der Datei. Ein Angreifer E (z. B. Eve) fängt diese Kommunikation ab und ersetzt die Datei durch eine gefälschte Datei. Die gefälschte Datei enthält gefälschte Daten. Außerdem ersetzt E den Hashwert der Datei durch den Hashwert der gefälschten Datei. Wenn B nun die Daten empfängt und überprüft, indem er die Hashfunktion der Datei selbst berechnet und mit dem Hashwert vergleicht, kommt er zu dem Schluss, dass die Daten nicht manipuliert wurden. So hat E erfolgreich die Daten manipuliert, ohne dass dies von B festgestellt wurde.

Um dies zu vermeiden, ist ein anderes Verfahren als sogenannte Blockverkettung (block chain) bekannt. Eine Blockverkettung besteht aus Daten, welche in Form von aneinandergereihten Datenblöcken organisiert sind. Einer Blockverkettung kann so bei Bedarf ein weiterer Datenblock am Ende der Blockverkettung angefügt werden. Dabei wird ein Hashwert des vorhergehenden Blocks, zusätzlich zu eventuellen Nutzdaten, in jedem neuen Block gespeichert.

Wird ein Block innerhalb der Blockverkettung durch einen Angreifer manipuliert, wird die Verkettung inkonsistent. Für eine erfolgreiche Manipulation muss durch den Angreifer daher ein gewisser Teil der Kette neu berechnet werden. Die Blockverkettung stellt so eine hohe Datenintegrität der auf ihr gespeicherten Daten zur Verfügung.

Blockverkettungen haben verschiedene Anwendungsbereiche. Im Bereich der virtuellen Währungen können Blockverkettungen eingesetzt werden, beispielsweise bei der Währung Bitcoin. Bei Bitcoin besteht eine Blockverkettung aus einer Reihe von Datenblöcken, in denen jeweils eine oder mehrere Transaktionen zusammengefasst und mit einer Prüfsumme versehen sind, d. h., sie werden jeweils paarweise zu einem Hash-Baum zusammengefasst. Der Stand der Technik für Blockverkettung hat jedoch den Nachteil, dass er schlecht skalierbar ist. Da Blockverkettungen kommunikations- und rechenintensiv sind, weil alle "Knoten", die an der Blockverkettung beteiligt sind, untereinander abgeglichen werden müssen, können nach derzeitigem Stand nur sehr wenige Transaktionen (d.h. Einträge in eine Blockverkettung) pro Sekunde weltweit durchgeführt werden. Allerdings besteht ein wachsender Bedarf an Speicherplatz und anderen Ressourcen wie Bandbreite.

Zu Zwecken der Transparenz, sind Blockverkettungen häufig öffentlich zugänglich, wodurch sie überprüfbar werden, aber auch für andere einsehbar sind. Das hat den Nachteil, dass vertrauliche Daten nicht in die Kette eingebracht werden können, oder die Kenntnisnahme der Daten durch Dritte in Kauf genommen werden muss.

Ein weiterer Nachteil besteht in der geringen Flexibilität der Verkettung. Häufig werden Daten nur für einen gewissen Zeitraum benötigt, und sind danach überflüssig, sollen anonymisiert oder pseudonymisiert werden (oder sollen sogar ganz gelöscht werden, z.B. um gesetzliche Vorgaben z. B. im Datenschutz zu erfüllen). Sind diese Daten aber nun in die Blockverkettung eingebracht, sind sie fester Teil der Kette, belegen Ressourcen, und können nicht problemlos entfernt oder geändert werden, ohne die Verkettung dabei zu zerstören.

Zudem ist die redundante Speicherung von Daten, die aufgrund der Geheimhaltung und dem damit verbundenen Erfordernis der Unveränderbarkeit von Daten erforderlich ist, sehr kostenintensiv, wobei schon für die Speicherung von geringen Datenmengen enorme Kosten entstehen können.

Der vorliegenden Erfindung liegt daher die technische Aufgabe zugrunde, Verfahren bereitzustellen, die die Nachteile des Standes der Technik überwinden und neue Lösungen ermöglichen. Insbesondere werden flexiblere, skalierbare, sicherere, datenschutzkonformere, verlässlichere Lösungen benötigt. Auch der Faktor der Kostenminimierung spielt eine wesentliche Rolle.

Die Nachteile des Standes der Technik werden überwunden durch das Verfahren zum Speichern oder Sichern von Daten einer Datenstruktur nach Anspruch 1, das Verfahren zum Löschen eines Datenelements aus einer Datenstruktur nach Anspruch 16, das Verfahren zum Verifizieren von Daten einer Datenstruktur nach Anspruch 20 und das Verfahren zum systematischen Erhalt der Integrität einer Datenstruktur nach Anspruch 28 sowie durch die entsprechende Vorrichtung nach Anspruch 29, das Computerprogramm nach Anspruch 31 und das computerlesbare Medium nach Anspruch 32.

### Beschreibung der Erfindung

Die vorliegende Erfindung schafft ein Verfahren mit den Merkmalen des Anspruchs 1.

Weitere vorteilhafte Ausgestaltungen sind in den Unteransprüchen angegeben.

Demgemäß ist ein Verfahren zum Erzeugen von Daten einer Datenstruktur vorgesehen, umfassend die folgenden Schritte: Auswählen von einer ersten Instanz, welche sich in der Datenstruktur befindet und zumindest ein erstes Datenelement umfasst, Auswählen von zumindest einer zweiten Instanz, welche sich in der Datenstruktur befindet und zumindest ein zweites Datenelement umfasst, Berechnen von Einzel-Hashwerten auf Basis der jeweiligen Datenelemente innerhalb der entsprechenden Instanzen, Erzeugen mindestens eines Master-Hashwertes auf Basis der Einzel-Hashwerte.

Der so erzeugte Master-Hashwert kann in einem Medium oder System, welches die Integrität der auf ihm gespeicherten Daten algorithmisch und/oder mathematisch absichert, gespeichert oder gesichert werden.

Erfindungsgemäß werden eine erste und eine zweite Instanz aus einer Datenstruktur ausgewählt. Die Datenstruktur kann beliebige Daten enthalten. Eine Instanz ist dabei eine Ansammlung von Daten, beispielsweise ein Datensatz. Die erste und zweite Instanz können identisch, verschieden oder teilweise überlappend sein.

Die erste und die zweite Instanz umfassen jeweils mindestens ein Datenelement. Sodann werden Einzel-Hashwerte auf Basis der Datenelemente berechnet. Dies kann auf ausschließlicher Basis der Datenelemente geschehen, aber auch unter Zuhilfenahme weiterer Strukturen und Verfahrensschritte.

Sodann wird mindestens ein Master-Hashwert auf Basis der Einzel-Hashwerte erzeugt. Dies kann auf ausschließlicher Basis der Einzel-Hashwerte geschehen, aber auch unter Zuhilfenahme weiterer Strukturen und Verfahrensschritte.

Es wird mindestens einer der Master-Hashwerte in einem Medium oder System gesichert, welches die Integrität der auf ihm gespeicherten Daten algorithmisch und/oder mathematisch absichert.

In einem einfachen Ausführungsbeispiel sind die beiden Instanzen verschieden. Als Daten kommen Textdaten, d.h. Zeichenketten, zum Einsatz, wenngleich die Erfindung nicht auf Textdaten als Datentyp beschränkt ist, sondern auch andere Datentypen wie beispielsweise Bilddaten, Audiodaten, Videodaten, Binärdaten etc. enthalten kann. Es können auch Dateien oder Teile von Dateien als Daten zum Einsatz kommen. Beispielsweise können die Daten so auch in einem Dateiformat vorliegen oder einem Format oder in einer Form, welche einem Dateiformat ähnelt. In einem weiteren Beispiel kommen Daten im Format JavaScript Object Notation (JSON-Format) zum Einsatz.

Die Daten können beispielsweise so ausgestaltet sein, dass sie Datenelemente enthalten, die in einem Dateiformat vorliegen. Zum Beispiel kann ein Bild ein Datenelement sein und im JPEG-Format vorliegen. Datenelemente können aber auch kleinere Einheiten sein. Insbesondere kann dabei ein Dateiformat beispielsweise die den Datenelementen übergeordnete Struktur festlegen. Beispielsweise kann eine Datei im JSON-Format vorliegen und viele Datenelemente enthalten, wobei die Datenelemente selbst beispielsweise Textdaten enthalten.

Die erste Instanz enthält in einem Beispiel zwei Datenelemente "John" und "Doe" in Form von Textdaten, die zweite Instanz enthält nur ein Datenelement "Go Huskies!". Sämtliche Datenelemente der ersten Instanz sind in diesem Beispiel also verschieden von den Datenelementen der zweiten Instanz, dies kann in anderen Ausführungsbeispielen jedoch anders sein.

In dem Ausführungsbeispiel werden nun Einzel-Hashwerte auf Basis der Datenelemente berechnet. Dies kann auf ausschließlicher Basis des jeweiligen Datenelements geschehen. Beispielsweise wird die Hashfunktion SHA256 auf das Datenelement "John" angewandt und das Ergebnis als Einzel-Hashwert behandelt. Ähnlich kann mit SHA256 ein Einzel-Hashwert für "Doe" und ein weiterer Einzel-Hashwert für "Go Huskies!" berechnet werden. Erfindungsgemäß können jedoch auch weitere Strukturen und Verfahrensschritte bis zur Generierung des Einzel-Hashwertes zum Einsatz kommen. Beispielsweise kann in einer anderen Ausführungsform das Ergebnis der Hashfunktion SHA256 mit einem anderen Datenelement (nicht beansprucht) oder mit dem Hashwert eines solchen anderen Datenelements kombiniert werden. Auch die Natur dieser Kombination kann unterschiedlich ausgestaltet werden: Beispielsweise wird an den Hashwert des Datenelements der Hashwert des anderen Datenelements angehängt, oder es wird das andere Datenelement selber an den Hashwert angehängt. Hierzu gibt es zahlreiche Möglichkeiten. Insbesondere gibt es die Möglichkeit diese Kombination abermals als Eingabe für den Hashalgorithmus zu benutzen, um einen erfindungsgemäßen Einzel-Hashwert zu erhalten. So wird beispielsweise der SHA256-Wert des Datenelements "John" berechnet. An dieses Ergebnis wird nun der SHA256-Wert eines anderen Datenelements angehängt, um sodann auf diese Konkatenation abermals SHA256 anzuwenden. Das letztere Ergebnis ist dann in diesem Ausführungsbeispiel der erfindungsgemäße Einzel-Hashwert des Datenelements "John".

Sodann wird mindestens ein Master-Hashwert auf Basis der Einzel-Hashwerte erzeugt. In einem Ausführungsbeispiel gibt es nun zwei Einzel-Hashwerte für die Datenelemente "John" und "Doe" der ersten Instanz sowie einen Einzel-Hashwert für das Datenelement "Go Huskies!" der zweiten Instanz.

Auch die Berechnung der Master-Hashwerte kann, analog zur obigen Diskussion in Bezug auf die Einzel-Hashwerte, auf ausschließlicher Basis der Einzel-Hashwerte geschehen, aber auch unter Zuhilfenahme weiterer Strukturen und Verfahrensschritte. In einem einfachen Ausführungsbeispiel werden die Einzel-Hashwerte für "John" und "Doe" aneinander gefügt, um hierauf SHA256 anzuwenden. In einem Ausführungsbeispiel ist das so erzeugte Ergebnis direkt als Master-Hashwert der ersten Instanz zu verwenden. Für die zweite Instanz kann in einem einfachen Ausführungsbeispiel der Einzel-Hashwert direkt als Master-Hashwert verwendet werden, da in der zweiten Instanz nur ein Datenelement "Go Huskies!" und daher für die zweite Instanz nur ein Einzel-Hashwert existiert. Dies ist jedoch lediglich ein sehr einfaches Beispiel, auf das sich die Lehre der Erfindung keineswegs beschränkt.

Es können zur Erzeugung eines weiteren Master-Hashwertes auch bereits erzeugte Master-Hashwerte berücksichtigt werden. Beispielsweise kann ein weiterer Master-Hashwert auf Basis der beiden Master-Hashwerte, die für die erste und zweite Instanz erzeugt wurden, berechnet werden.

Erfindungsgemäß wird mindestens ein Master-Hashwert in einem Medium oder System gesichert, welches die Integrität der auf ihm gespeicherten Daten algorithmisch und/oder mathematisch absichert.

Durch die Sicherheit des Mediums oder Systems wird die Authentizität des Hashwertes und seine spätere Überprüfbarkeit gesichert und erhalten.

Das erfindungsgemäße Verfahren hat zahlreiche Vorteile. Es erlaubt, zuverlässige Hashwerte für beliebige Daten effizient zu erzeugen. Es erlaubt zudem, den so erzeugten Hashwert effizient, datenschutzkonform und manipulationssicher zu erhalten.

Dadurch kann die Authentizität und Integrität der Daten gesichert werden. Insbesondere ist die Datenintegrität einer späteren Überprüfung zugänglich. Insbesondere ist diese Überprüfung möglich, ohne auf ein Vertrauensverhältnis gegenüber einer Partei, welche die Daten gegebenenfalls zur Verfügung stellt, zurückgreifen zu müssen. Vielmehr ist die Authentizität und Integrität der Daten objektiv und algorithmisch verifizierbar.

Ein weiterer Vorteil der Erfindung besteht darin, dass das System oder Medium, welches die Integrität der auf ihm gespeicherten Daten algorithmisch und/oder mathematisch absichert, öffentlich zugänglich sein kann, ohne dass dabei der Inhalt der Daten der Datenstruktur preisgegeben wird. Ein weiterer Vorteil der Erfindung besteht darin, dass das System oder Medium, welches die Integrität der auf ihm gespeicherten Daten algorithmisch und/oder mathematisch absichert und welches als nicht öffentlich zugänglich ausgestaltet ist, den Inhalt der Daten der Datenstruktur nicht preisgibt, wenn das System oder Medium durch eine Computerattacke einem Angreifer zugänglich wird.

Häufig ist Speicherplatz auf einem solchen System oder Medium eine kostenbare und kostspielige Ressource. Ein weiterer Vorteil der Erfindung besteht darin, dass diese Ressourcen eingespart werden können, da statt der Daten der Datenstruktur wenig speicherplatzintensive Hashwerte in das System oder Medium eingebracht werden. Durch die effizientere Ressourcennutzung ist die erfindungsgemäße Lösung viel skalierbarer und erlaubt es, ein solches System oder Medium zur Sicherung der Datenintegrität von sehr großen Mengen an Daten zu nutzen, insbesondere ohne dass der Speicherplatzbedarf des Systems oder Mediums direkt mit den großen Datenmengen skalieren muss.

Das erfindungsgemäße Verfahren nach Anspruch 1 hat den Vorteil, dass es nach dem "Schlüssel-Schloss-Prinzip" eine vorteilhafte Wechselwirkung mit den Verfahren der anderen unabhängigen Ansprüche ermöglicht. Die beanspruchten Verfahren stehen also zueinander in einer synergistischen Beziehung, und die volle technische Wirkung der Verfahren erschließt sich dem Fachmann bei der Gesamtbetrachtung der beanspruchten Verfahren und ihrer Wechselwirkung. Insbesondere können die mit einem Verfahren nach Anspruch 1 gesicherten Daten verifiziert werden und sie können datenschutzkonform gelöscht werden, ohne das System oder Medium dafür zerstören oder in seiner Funktion beeinträchtigen zu müssen. Außerdem können Daten aus einer Datenstruktur gelöscht werden, wobei Dritte, die die Daten vor dem Löschvorgang erhalten haben, die Integrität der Daten weiterhin auch nach dem Löschvorgang korrekt verifizieren können.

Zudem können Datenelemente aus übergeordneten Einheiten wie Datensätzen oder Instanzen gelöscht werden, ohne die Verifizierbarkeit der übrigen Daten zu beeinträchtigen.

Durch das Zusammenspiel der Verfahren sind die genannten Prozesse effizient, datenschutzkonform, flexibel und skalierbar durchführbar. Datenintegrität ist dabei objektiv verifizierbar, d.h. ohne eine Vertrauenserfordernis z. B. in die die Nutzdaten bereitstellende Partei.

Die vorliegende Erfindung schafft außerdem ein Verfahren mit den Merkmalen des Anspruchs 20.

Demgemäß ist ein Verfahren zum Verifizieren von Daten einer Datenstruktur vorgesehen, umfassend die folgenden Schritte: Auswählen einer Instanz, welche mindestens ein Datenelement umfasst, aus einer Datenstruktur, Berechnen mindestens eines Einzel-Hashwertes auf Basis eines ausgewählten Datenelements oder Auslesen eines Einzel-Hashwertes, welcher ein gelöschtes Datenelement repräsentiert, Erzeugen mindestens eines Master-Hashwertes auf Basis der Einzel-Hashwerte, Auslesen eines Referenz-Master-Hashwertes aus einem Medium oder System, welches die Integrität der auf ihm gespeicherten Daten algorithmisch und/oder mathematisch absichert, oder aus einer Kopie von auf einem solchen Medium oder System gesicherten Daten, Vergleichen des erzeugten Master-Hashwertes mit dem ausgelesenen Referenz-Master-Hashwert, Feststellung eines Ergebnisses in Bezug auf die Integrität der Daten der ausgewählten Instanz, wobei, wenn der Vergleich des erzeugten Master-Hashwertes mit dem ausgelesenen Referenz-Master-Hashwert positiv ausfällt, das Nichtvorliegen einer Datenmanipulation festgestellt wird, oder wenn der Vergleich des erzeugten Master-Hashwertes mit dem ausgelesenen Referenz-Master-Hashwert nicht positiv ausfällt, das Vorliegen einer Datenmanipulation festgestellt wird, wobei das Ergebnis insbesondere zusätzliche Aussagen über den Ort der festgestellten Datenmanipulation enthalten kann.

Das erfindungsgemäße Verfahren nach Anspruch 20 verifiziert dadurch Daten, welche nach einem Verfahren nach Anspruch 1 gespeichert oder gesichert wurden.

In einem Ausführungsbeispiel möchte eine Partei die Integrität von Daten überprüfen. Dazu werden anspruchsgemäß die Schritte des Anspruchs 1, welche zur Erzeugung mindestens eines Master-Hashwertes führen, für mindestens eine Instanz reproduziert. Für die Erläuterung dieser Schritte und zugehörige Ausführungsbeispiele wird daher auf die obige Diskussion verwiesen. Erfindungsgemäß wird sodann nach Anspruch 20 ein Referenz-Master-Hashwert aus einem Medium oder System, welches die Integrität der auf ihm gespeicherten Daten algorithmisch und/oder mathematisch absichert, oder aus einer Kopie von auf einem solchen Medium oder System gesicherten Daten ausgelesen.

Der Referenz-Master-Hashwert selbst hat also eine sehr hohe Datenintegrität. Die Partei kann so die Echtheit der Daten verifizieren.

Eine Partei kann auch Daten, welche sie erhalten hat, verifizieren, wenn sie vom Bereitsteller der Datenstruktur bereits mit einem Verfahren nach Anspruch 16 gelöscht wurden.

Wenn ein Datenelement bereits aus der Datenstruktur mit einem Verfahren nach Anspruch 16 gelöscht wurde, so findet erfindungsgemäß nach Anspruch 20 statt der Berechnung des Einzel-Hashwertes ein Auslesen eines Einzel-Hashwertes, welcher das gelöschte Datenelement repräsentiert, statt. So wird sichergestellt, dass eine Instanz auch dann verifiziert werden kann, wenn ein oder mehrere Datenelemente bereits gelöscht wurden. Dadurch wird sichergestellt, dass die Verifikation der übrigen Daten der Instanz nicht durch das gelöschte Element beeinträchtigt wird.

Das erfindungsgemäße Verfahren nach Anspruch 20 hat den Vorteil, dass es nach dem "Schlüssel-Schloss-Prinzip" eine vorteilhafte Wechselwirkung mit den Verfahren der anderen unabhängigen Ansprüche ermöglicht. Die beanspruchten Verfahren stehen also zueinander in einer synergistischen Beziehung, und die volle technische Wirkung der Verfahren erschließt sich dem Fachmann bei der Gesamtbetrachtung der beanspruchten Verfahren und ihrer Wechselwirkung. Insbesondere können die mit dem Verfahren zum Sichern gesicherten Daten verifiziert werden und sie können datenschutzkonform gelöscht werden, ohne das System oder Medium dafür zerstören oder in seiner Funktion beeinträchtigen zu müssen. Außerdem können Daten aus einer Datenstruktur gelöscht werden, wobei Dritte, die die Daten vor dem Löschvorgang erhalten haben, die Integrität der Daten weiterhin auch nach dem Löschvorgang korrekt verifizieren können.

Durch das Zusammenspiel der Verfahren sind die genannten Prozesse effizient, datenschutzkonform, flexibel und skalierbar durchführbar. Datenintegrität ist dabei objektiv verifizierbar, d.h. ohne eine Vertrauenserfordernis z. B. in die die Nutzdaten bereitstellende Partei.

Weitere Vorteile des Verfahrens nach Anspruch 20 ergeben sich aus obigen Erläuterungen in Bezug auf den Anspruch 1.

Die vorliegende Erfindung schafft außerdem ein Verfahren mit den Merkmalen des Anspruchs 16.

Demgemäß ist ein Verfahren zum Löschen eines Datenelements aus einer Datenstruktur, vorzugsweise in Verbindung mit dem Verfahren zum Speichern oder Sichern von Daten einer Datenstruktur (301) und/oder diesem nachgeschaltet, vorgesehen, umfassend die folgenden Schritte: Berechnen eines Hashwertes mindestens auf Basis des zu löschenden Datenelements innerhalb einer Instanz und Ersetzen des Datenelements in der Datenstruktur durch den berechneten Hashwert.

Durch das Ersetzen wird das Datenelement selbst datenschutzkonform gelöscht.

Wenn ein Datenelement bereits aus der Datenstruktur mit einem Verfahren nach Anspruch 16 gelöscht wurde, so findet beim Verifizieren einer Instanz nach Anspruch 20 statt der Berechnung des Einzel-Hashwertes ein Auslesen eines Einzel-Hashwertes, welcher das gelöschte Datenelement repräsentiert, statt. So wird sichergestellt, dass eine Instanz auch dann verifiziert werden kann, wenn ein oder mehrere Datenelemente bereits gelöscht wurden. Dadurch wird sichergestellt, dass die Verifikation der übrigen Daten der Instanz nicht durch das gelöschte Element beeinträchtigt wird.

Weitere technische Vorteile ergeben sich aus dem Zusammenspiel mit den Verfahren der anderen Verfahrensansprüche, auf deren Diskussion an dieser Stelle verwiesen wird.

Die vorliegende Erfindung schafft außerdem ein Verfahren mit den Merkmalen des Anspruchs 28.

Demgemäß ist ein Verfahren zum systematischen Erhalt der Integrität einer Datenstruktur und ihrer Überprüfbarkeit vorgesehen, welches ein in regelmäßigen oder unregelmäßigen Zeitabständen wiederkehrend auszuführendes Verfahren zum Sichern von Daten nach einem der Ansprüche 1 - 15 umfasst.

Durch die regelmäßige Datensicherung wird eine permanente Überprüfbarkeit der Datenintegrität ermöglicht. Kosten und Ressourcen werden dadurch geschont, dass nicht übermäßig häufig auf dem Medium oder System, welches die Integrität der auf ihm gespeicherten Daten algorithmisch und/oder mathematisch absichert, neue Daten gesichert werden müssen.

Die vorliegende Erfindung schafft außerdem ein Verfahren mit den Merkmalen des Anspruchs 30.

Demgemäß ist ein Verfahren zum Einrichten eines Computers, Computernetzwerks oder Computersystems vorgesehen, umfassend ein Verteilen und/oder Übertragen von computerausführbaren Anweisungen, welche dazu geeignet sind, auf einem Computer die Ausführung eines Verfahren zum Sichern von Daten nach einem der Ansprüche 1 - 15, eines Verfahren zum Löschen eines Datenelements nach einem der Ansprüche 16 - 19, eines Verfahren zum Verifizieren von Daten nach einem der Ansprüche 20 - 27, und/oder eines Verfahren zum systematischen Erhalt der Integrität einer Datenstruktur und ihrer Überprüfbarkeit nach Anspruch 28 zu bewirken.

Durch das Verfahren kann ein Computer, Computernetzwerk oder Computersystem für den erfindungsgemäßen Einsatz effizient errichtet und/oder eingerichtet werden. Insbesondere kann auch ein System, welches die Integrität der auf ihm gespeicherten Daten algorithmisch und/oder mathematisch absichert, durch ein solches Verfahren errichtet und/oder eingerichtet werden. Beispielsweise kann so auch eine Blockverkettung auf einem verteilten System eingerichtet werden. In einem Beispiel verteilt ein Computer, auf dem das Verfahren ausgeführt wird, ausführbaren Code für eines oder mehrere der Verfahren nach einem der Ansprüche 1 - 28 an einen oder mehrere andere Computer in einem Computernetzwerk, wie beispielsweise einem Intranet oder dem Internet. Durch das Verfahren zum Einrichten werden zudem die einzelnen technischen Effekte der Verfahren der Ansprüche 1 - 28 effizient realisiert.

Zudem schafft die vorliegende Erfindung auch ein Computerprogramm nach Anspruch 31, umfassend ein Verfahren zum Sichern von Daten nach einem der Ansprüche 1 - 15, ein Verfahren zum Löschen eines Datenelements nach einem der Ansprüche 16 - 19, ein Verfahren zum Verifizieren von Daten nach einem der Ansprüche 20 - 27, ein Verfahren zum systematischen Erhalt der Integrität einer Datenstruktur und ihrer Überprüfbarkeit nach Anspruch 28, und/oder ein Verfahren zum Einrichten eines Computers, Computernetzwerks oder Computersystems nach Anspruch 30. Das Computerprogramm erzeugt so einen oder mehrere sogenannte weitere technische Effekte (further technical effects).

Zudem schafft die vorliegende Erfindung auch ein computerlesbares Medium nach Anspruch 32, umfassend computerausführbare Anweisungen, welche dazu geeignet sind, auf einem Computer die Ausführung eines Verfahren zum Sichern von Daten nach einem der Ansprüche 1 - 15, eines Verfahren zum Löschen eines Datenelements nach einem der Ansprüche 16 - 19, eines Verfahren zum Verifizieren von Daten nach einem der Ansprüche 20 - 27, eines Verfahren zum systematischen Erhalt der Integrität einer Datenstruktur und ihrer Überprüfbarkeit nach Anspruch 28, und/oder eines Verfahren zum Einrichten eines Computers, Computernetzwerks oder Computersystems nach Anspruch 30 zu bewirken.

Durch das Computerprogramm und das computerlesbare Medium werden insbesondere die einzelnen technischen Effekte der Verfahren der Ansprüche 1 - 30 effizient realisiert.

Das Medium oder System, welches die Integrität der auf ihm gespeicherten Daten algorithmisch und/oder mathematisch absichert, umfasst in einem Beispiel Mittel, welche zum Erfassen und/oder Speichern von Daten eingerichtet ist. Diese können Daten in flüchtiger oder nicht-flüchtiger Form erfassen und/oder speichern. Als Technologien kommen lediglich beispielhaft in Frage eine oder mehrere aus: Festplatten, Magnetspeicher, Solid State Drives (SSD), RAM, ROM, optische Speicher, Network Attached Storage (NAS), und vieles mehr. Da erfindungsgemäß die Integrität der gespeicherten Daten algorithmisch und/oder mathematisch abgesichert wird, sind im Allgemeinen sämtliche kontemporäre und zukünftige Speicher- und Datenverarbeitungstechnologien zur Verwendung mit der vorliegenden Erfindung zugänglich.

Vorteilhafte Ausführungsformen und Weiterbildungen ergeben sich aus den Unteransprüchen sowie aus der Beschreibung unter Bezugnahme auf die Figuren.

Gemäß einer Weiterbildung ist das Medium oder System, welches die Integrität der auf ihm gespeicherten Daten algorithmisch und/oder mathematisch absichert, ein verteiltes Computersystem, insbesondere ein Blockchain-basiertes System, insbesondere ein Distributed Ledger, umfasst, wobei das verteilte Computersystem privat oder öffentlich zugänglich sein kann.

Durch das verteilte Computersystem wird ein Angriff auf das System erschwert. Das System operiert dezentral und wird dezentral verwaltet. Dadurch wird ein lokaler Angriff schwierig und die Integrität des Mediums erhöht. Entscheidungen werden demokratisch und dezentral von den Teilnehmern getroffen, wodurch es für einen Angreifer schwierig ist, das Gesamtsystem zu täuschen.

Die Blockchain ist durch den Proof of Work besonders sicher, da ein potentieller Angreifer hier enorme Rechenleistung braucht, um das System zu täuschen.

Gemäß einer Weiterbildung erfolgt die Berechnung von Hashwerten für Datenelemente auf Basis einer Struktur, welche das Datenelement und ein weiteres Datenelement, insbesondere einen Seed/Salt, umfasst.

Eine gute Hashfunktion sollte nicht oder nur unter schwierigen Umständen umkehrbar sein. Sogenannte Brute-Force-Angriffe sind jedoch möglich. In einer Variante wird von einem Angreifer eine sogenannte Wörterbuchattacke eingesetzt.

In einem einfachen Beispiel mit nur einem Datenelement ist das Datenelement durch "John" gegeben. Der zugehörige SHA256-Hashwert ist durch
a8cfcd74832004951b4408cdb0a5dbcd8c7e52d43f7fe244bf720582e05241 da gegeben. Ein Angreifer entscheidet sich für einen Wörterbuchangriff und prüft bekannte Vornamen. Durch seine Beschränkung auf Vornamen ist sein Angriff sehr effizient. Nach kurzer Zeit stellt er durch Ausprobieren auf Grundlage des Wörterbuchs fest, dass der oben zitierte Hash dem Datenelement "John" entspricht. So hat der Angreifer auf Basis eines Hashwertes die ursprünglichen Daten erlangt. Ein solcher Angriff ist auch für Instanzen mit mehreren Datenelementen denkbar.

Durch den Einbezug eines weiteren Datenelements werden Wörterbuchattacken stark erschwert, insbesondere wenn es keinen systematisch-inhaltlichen Bezug zu den Datenelementen aufweist.

Durch den Einbezug eines weiteren Datenelements, insbesondere eines Seeds/Salts, beim Verfahren zum Sichern wird sichergestellt, dass es für einen Angreifer äußerst schwierig oder praktisch unmöglich ist, die Daten aus dem Master-Hashwert, der auf dem Medium oder System, welches die Integrität der auf ihm gespeicherten Daten algorithmisch und/oder mathematisch absichert, gesichert wird, zu rekonstruieren.

Durch den Einbezug eines weiteren Datenelements, insbesondere eines Seeds/Salts, beim Verfahren zum Löschen eines Datenelements wird zudem sichergestellt, dass es für einen Angreifer äußerst schwierig oder praktisch unmöglich ist, das gelöschte Datenelement aus dem Hashwert, durch den das Datenelement beim Löschen ersetzt wurde, zu rekonstruieren.

Dadurch ist es möglich, die Vertraulichkeit der Daten besser abzusichern und datenschutzkonform zu arbeiten.

Gemäß einer Weiterbildung wird zumindest teilweise das ursprüngliche Datenelement in der Datenstruktur durch den berechneten Hashwert überschrieben wird und/oder es werden Bereiche des ursprünglichen Datenelements, die nicht durch den berechneten Hashwert überschrieben wurden mit anderen Daten, insbesondere randomisierten Daten, insbesondere mehrfach, überschrieben.

So wird das zu löschende Datenelement besonders sicher und datenschutzkonform gelöscht, und kann von einem Angreifer nicht aus dem überschriebenen Speicherbereich rekonstruiert werden.

Das zu löschende Datenelement wird also nicht nur logisch gelöscht, sondern physisch oder physikalisch zumindest teilweise, d. h. in einem Teilbereich, überschrieben.

Manche Medien haben einen "Memory-Effekt" und überschriebene Daten lassen sich rekonstruieren. Durch das Überschreiben mit anderen Daten wird eine solche Rekonstruktion erschwert. Durch den Einsatz randomisierter Daten und/oder durch mehrfaches Überschreiben wird der Schutz gegen unautorisierte Datenrekonstruktion abermals verstärkt.

Gemäß einer Weiterbildung erfolgt das Erzeugen eines Master-Hashwertes außerdem auf Basis mindestens einer weiteren Instanz. Eine solche weitere Instanz umfasst in einem Beispiel insbesondere eine bereits in dem Medium oder System, welches die Integrität der auf ihm gespeicherten Daten algorithmisch und/oder mathematisch absichert, gesicherte Instanz.

Beispielsweise kann ein Master-Hashwert dadurch zusätzlich auf einem vorhergehenden oder älteren Hashwert oder Master-Hashwert beruhen. In einem Beispiel ist ein solcher älterer Hashwert oder Master-Hashwert bereits in einem Block vorhanden, der bereits als Teil in einem Block einer Blockverkettung gesichert ist. Beispielsweise ist es ein Master-Hashwert, der bereits im letzten/jüngsten Block der Blockverkettung gesichert ist.

Die Blockverkettung selbst basiert bereits auf einer Verkettung über Hashwerte. In einem Beispiel gemäß der Weiterbildung entsteht so eine zusätzliche Blockverkettung innerhalb oder zusätzlich zu der eigentlichen Blockverkettung. Durch diese "Blockchain in the blockchain", also eine weitere Verkettung innerhalb oder zusätzlich zu der eigentlichen Blockverkettung, wird das System besonders sicher, und es wird für einen Angreifer noch schwieriger das System zu täuschen und Daten zu manipulieren.

Gemäß einer Weiterbildung umfasst das Erzeugen eines Master-Hashwertes eine Reduktion der Anzahl der Hashwerte, insbesondere eine rekursive oder sukzessive Reduktion. Durch diese Reduktion werden Speicherplatz und Ressourcen eingespart. Insbesondere wird so weniger Speicherplatz auf dem Medium oder System, welches die Integrität der auf ihm gespeicherten Daten algorithmisch und/oder mathematisch absichert, benötigt.

Gemäß einer Weiterbildung umfasst das Erzeugen eines Master-Hashwertes ein Erzeugen einer Baumstruktur oder einer gleichwertigen Datenstruktur, welche eine Baumstruktur abbilden kann, auf Basis der Hashwerte. Durch eine derartige Baumstruktur wird eine rekursive und/oder sukzessive Reduktion der Hashwerte effizient und ressourcensparend umgesetzt. Durch die gleichwertige Datenstruktur wird derselbe technische Effekt erreicht. Gemäß einer Weiterbildung bildet die Baumstruktur oder gleichwertige Datenstruktur einen Merkle-Tree ab. Durch den Merkle-Tree oder Hashbaum erfolgt die Reduktion der Hashwerte zur Erzeugung von Master-Hashwerten effizient.

Gemäß einer Weiterbildung umfasst dieser Merkle-Tree einen binären Baum. Binäre Strukturen sind auf modernen Computern besonders effizient und erlauben effiziente Algorithmen mit gutem Laufzeitverhalten.

Gemäß einer Weiterbildung wird ein Master-Hashwert auf Basis der Wurzel der Baumstruktur oder der gleichwertigen Datenstruktur erzeugt. Dadurch kann einem Merkle-Tree ein Ergebnis, beispielsweise ein erzeugter Master-Hashwert, besonders einfach entnommen werden.

Gemäß einer Weiterbildung umfasst der Schritt des Auswählens ein Bestimmen eines Zeitintervalls Δt innerhalb der Datenstruktur und ein Auswählen der Instanzen innerhalb des bestimmten Zeitintervalls Δt; und/oder ein Auswählen einer definierten/vorbestimmten Anzahl an Instanzen.

Der Begriff "bestimmtes Zeitintervall Δt" betrifft hierin einen eindeutig definierten Abschnitt auf einer Zeitskala in Bezug auf das Verändern von Daten innerhalb einer Datenstruktur, der einen Anfang und ein Ende aufweist, die jeweils durch einen Zeitpunkt bestimmt sein können und innerhalb dessen zumindest eine erste Instanz, welche sich in der Datenstruktur befindet und zumindest eine zweite Instanz, welche sich in der Datenstruktur befindet, verändert, erzeugt oder gelöscht wurde. Damit lässt sich ein zeitlicher Abstand als Zeitdifferenz im selben Bezugssystem (nämlich innerhalb einer Datenstruktur) auffassen und so eine metrologisch festgelegte Zeitspanne für die Zeitmessung verwenden.

Durch diese Auswahl werden Speicherplatz und Ressourcen geschont. Zugleich wird die Gesamtmenge der Daten, auf deren Grundlage ein Master-Hashwert berechnet wird, überschaubar gehalten. Im Gegenzug müssen außerdem weniger Master-Hashwerte gesichert werden, was Kosten und Ressourcen im Hinblick auf das Medium oder System, welches die Integrität der auf ihm gespeicherten Daten algorithmisch und/oder mathematisch absichert, schont.

Gemäß einer Weiterbildung werden Instanzen ausgewählt, welche in dem bestimmten Zeitintervall Δt hinzugefügt oder geändert wurden. Hierdurch werden weiterer Speicherplatz und Ressourcen geschont, da Redundanzen vermieden werden. Die Instanzen können sich insbesondere auf die Gesamtdaten oder nur auf die Änderungen selbst beziehen (vergleiche "inkrementelles Backup"), um abermals weitere Ressourcen einzusparen.

Gemäß einer Weiterbildung werden, wenn Instanzen in dem bestimmten Zeitintervall Δt nicht geändert wurden, ältere Versionen der Instanzen, insbesondere die zeitlich jüngste existente Version, ausgewählt, die außerhalb des bestimmten Zeitintervalls Δt liegen. Dadurch wird die Vollständigkeit des Gesamtdatensatzes bei der Integritätssicherung gewahrt.

Optional kann vorgesehen sein, dass die Instanzen in dem bestimmten Zeitintervall Δtₙ aus einander zeitlich überlappenden Zeitintervallen ausgewählt werden.

Gemäß einer Weiterbildung wird beim Schritt des Sicherns eines Master-Hashwertes außerdem zusätzlich ein Zeitstempel gesichert. Hierdurch wird die Rückverfolgbarkeit der Änderungen, insbesondere im Hinblick auf die Sicherung der Integrität, verbessert. Die Datenintegrität kann so auch im Hinblick auf einen Zeitpunkt verifiziert werden. Beispielsweise könnte die Existenz einer Patentanmeldung an ihrem Anmeldetag zu einem späteren Zeitpunkt, beispielsweise zu einem Zeitpunkt einer Verletzungsklage aus der erteilten Patentschrift heraus, verifiziert werden.

Gemäß einer Weiterbildung umfassen die Datenelemente innerhalb einer Instanz Zeitstempel. Dies erleichtert abermals die Rückverfolgbarkeit und Integritätssicherung in Bezug auf Datenänderungen.

Durch den Einsatz von Zeitstempeln wird dem Angreifer eine Manipulation abermals erschwert, da Inkonsistenzen in der Abfolge von Zeitstempeln leicht aufgedeckt werden können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Figurenliste

Die vorliegende Erfindung wird nachfolgend anhand der in den schematischen Figuren der Zeichnungen angegebenen Ausführungsbeispiele näher erläutert. Es zeigen dabei:
Fig. 1a, Fig. 1b schematische Darstellungen von Berechnungen von Streu- oder Hashwerten aus Daten unter Anwendung einer Streuwert- oder Hashfunktion;
Fig. 2a schematische Darstellungen von Blockverkettungen;
Fig. 2b eine schematische Darstellung von zwei aufeinander folgenden Blöcken innerhalb einer Blockverkettung;
Fig. 3 eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung;
Fig. 4 eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung;
Fig. 5 eine schematische Darstellung eines Datenblocks für eine Blockverkettung zur Anwendung im Zusammenhang mit der vorliegenden Erfindung;
Fig. 6 eine schematische Darstellung eines Hashbaumes oder Merkle-Trees zur Anwendung im Zusammenhang mit der vorliegenden Erfindung;
Fig. 7a, Fig. 7b weitere schematische Darstellungen von Hashbäumen oder Merkle-Trees zur Anwendung im Zusammenhang mit der vorliegenden Erfindung im Rahmen konkreter Beispiele;
Fig. 8 eine weitere schematische Darstellung eines Hashbaumes oder Merkle-Trees zur Anwendung im Zusammenhang mit der vorliegenden Erfindung im Rahmen eines konkreten Beispiels mit Seeds/Salts;
Fig. 9 eine schematische Darstellung eines Hashbaumes oder Merkle-Trees und einer Blockverkettung zur Anwendung im Zusammenhang mit der vorliegenden Erfindung;
Fig. 10 eine schematische Darstellung eines Hashbaumes oder Merkle-Trees und einer Blockverkettung mit zusätzlicher Verkettung zur Anwendung im Zusammenhang mit der vorliegenden Erfindung;
Fig. 11, Fig. 12 schematische Darstellungen einer Datenstruktur zur Anwendung im Zusammenhang mit der vorliegenden Erfindung;
Fig. 13, Fig. 14, Fig. 15 schematische Darstellungen einer Datenstruktur im Zusammenhang mit einem Verfahren zum Löschen eines Datenelements;
Fig. 16 eine schematische Darstellung einer Datenstruktur, eines Mediums oder Systems, welches die Integrität der auf ihm gespeicherten Daten algorithmisch und/oder mathematisch absichert, und eines Anwenders gemäß einer Ausführungsform der vorliegenden Erfindung im Zusammenhang mit einem Verfahren zum Verifizieren von Daten innerhalb einer Daten struktur;
Fig. 17 eine schematische Darstellung einer Datenstruktur, eines Mediums oder Systems, welches die Integrität der auf ihm gespeicherten Daten algorithmisch und/oder mathematisch absichert, und eines Anwenders gemäß einer Ausführungsform der vorliegenden Erfindung im Zusammenhang mit einem Verfahren zum Verifizieren von Daten innerhalb einer Datenstruktur, nachdem ein Datenelement bereits aus der Datenstruktur gelöscht wurde;
Fig. 18, Fig. 19, Fig. 20 schematische Darstellungen eines zeitlichen Verlaufs gemäß einer Ausführungsform der vorliegenden Erfindung, insbesondere im Hinblick auf ein Speichern oder Sichern von Daten und den systematischen Erhalt der Integrität der Daten einer Datenstruktur.

In allen Figuren sind gleiche bzw. funktionsgleiche Elemente und Vorrichtungen - sofern nichts anderes angegeben ist - mit denselben Bezugszeichen versehen worden.

### Beschreibung der Zeichnungen

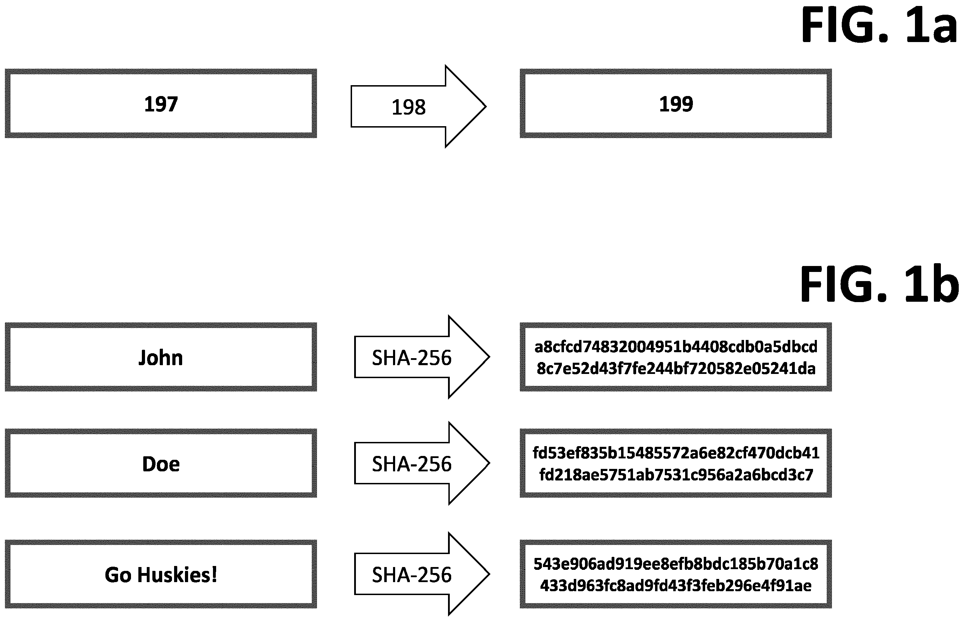

Die Fig. 1a zeigt eine schematische Darstellung einer Berechnung eines Streu- oder Hashwertes aus Daten unter Anwendung einer Streuwert- oder Hashfunktion. Dabei wird die Hashfunktion auf die Daten angewandt. In diesem konkreten Beispiel wird eine Hashfunktion 198 auf ein Datenelement 197 angewandt. Dabei entsteht, als Ergebnis, der Hashwert 199. Weitere konkrete Ausgestaltungen werden beispielsweise im Zusammenhang mit der Figur 1b beschrieben.

Die Fig. 1b zeigt schematische Darstellungen von Berechnungen von Streu- oder Hashwerten aus Daten unter Anwendung einer Streuwert- oder Hashfunktion. Als Hashfunktion kommt in diesem Beispiel der sichere Hash-Algorithmus (SHA, secure hash algorithm) zum Einsatz. Konkret kommt dieser Algorithmus in der Form SHA-256 zum Einsatz. Bei dieser Einsatzform hat der berechnete Hashwert eine feste Länge von 256 bit. In einem ersten Beispiel wird aus dem Datenelement "John" mittels SHA-256 der Hashwert a8cfcd74832004951b4408cdb0a5dbcd8c7e52d43f7fe244bf720582e05241da berechnet. In einem zweiten Beispiel wird aus dem Datenelement "Doe" mittels SHA-256 der Hashwert fd53ef835b15485572a6e82cf470dcb41fd218ae5751ab7531c956a2a6bcd3c7 berechnet. In einem dritten Beispiel wird aus dem Datenelement "Go Huskies!" mittels SHA-256 der Hashwert 543e906ad919ee8efb8bdc185b70a1c8433d963fc8ad9fd43f3feb296e4f91ae berechnet. Hashfunktionen können auch von SHA verschieden sein.

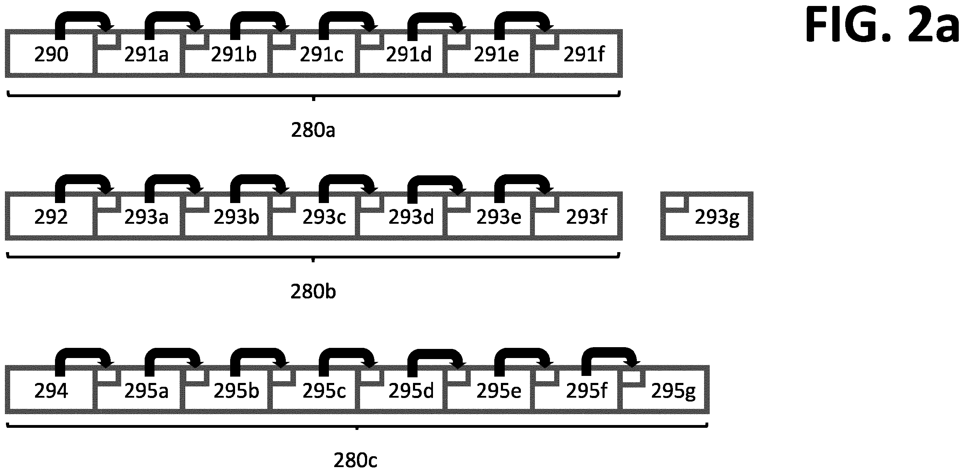

Die Fig. 2a zeigt schematische Darstellungen von Blockverkettungen 280a-c.

Die Blockverkettung 280a hat in der Regel einen Startblock 290, welcher in der Regel als "Block 0" nummeriert wird, aber keineswegs muss. Auf den Startblock folgen weitere sukzessive Blöcke 291a-f. Sämtliche Blöcke der Blockverkettung 280a können Nutzdaten enthalten, müssen dies aber nicht. Die sukzessiven Blöcke 291a-f haben einen Hashbereich. In der Fig. 2a sind derartige Hashbereiche in der oberen linken Ecke des jeweiligen Blocks eingezeichnet. Die Anordnung des Hashbereichs im jeweiligen Block ist jedoch beliebig. Der Blockanfang ist hierfür lediglich ein Beispiel. Die sukzessiven Blöcke enthalten jeweils die Hashwerte des jeweils vorhergehenden Blocks. Beispielsweise enthält der Block 291a den Hashwert des Startblocks 290 und der Block 291b den Hashwert des Blocks 291a. Beispielsweise kommt hierbei der SHA zum Einsatz. Blockverkettungen 280a-c können beliebige Längen aufweisen.

In einem Beispiel kann an die Blockverkettung 280b der neue Block 293g angefügt werden. Dazu wird beispielsweise der SHA-256-Hashwert von Block 293f berechnet und in den Hashbereich des Blocks 293g geschrieben. Es resultiert daraus eine Blockverkettung, die um einen Datenblock länger ist. Eine derart erweiterte Blockverkettung ist in der Fig. 2a beispielsweise als Blockverkettung 280c dargestellt.

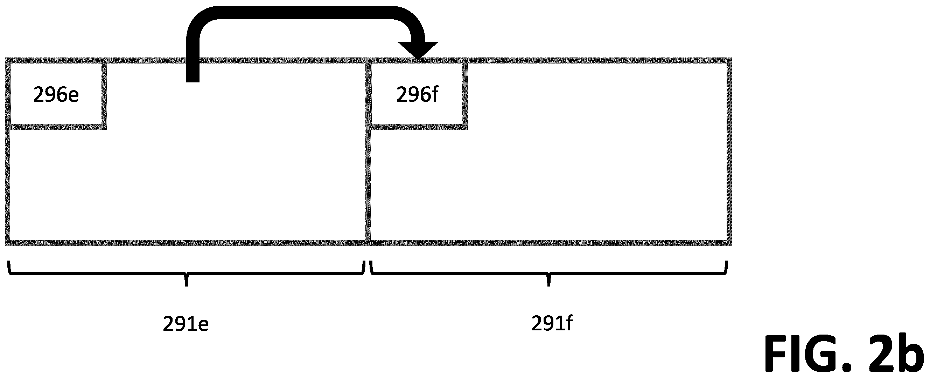

Die Fig. 2b zeigt eine schematische Darstellung der letzten beiden Blöcke 291e, 291f der Blockverkettung 280a im Hinblick auf die Verkettung der Einzelglieder einer solchen Blockverkettung. Die Hashregion 296f des Blocks 291f enthält den Hashwert des Blocks 291e. Diese Beziehung wird durch den Pfeil dargestellt.

Der Block 291e umfasst auch seine eigene Hashregion 296e. Hierdurch wird eine konsekutive Verkettung erreicht. Dadurch wird insbesondere erreicht, dass ein lokales Verändern von Daten innerhalb der Kette zu Inkonsistenzen der sukzessiven Verkettung führt.

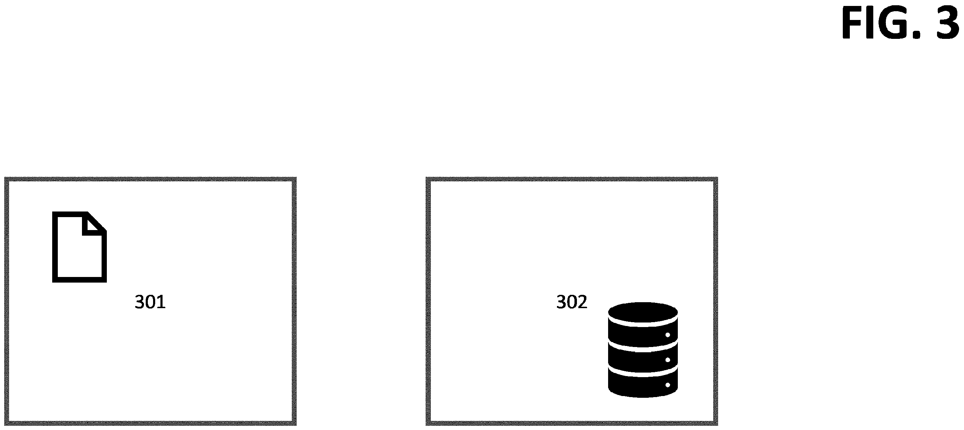

Die Fig. 3 zeigt eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung. Die Datenstruktur 301 enthält Daten. Daten können beispielsweise Textdaten, Bilddaten, Audiodaten, Videodaten, Binärdaten etc. enthalten. Es können auch Dateien oder Teile von Dateien als Daten zum Einsatz kommen. Beispielsweise können die Daten so auch in einem Dateiformat vorliegen oder einem Format oder in einer Form, welche einem Dateiformat ähnelt. In einem weiteren Beispiel kommen Daten im Format JavaScript Object Notation (JSON-Format) zum Einsatz. Die Daten können beispielsweise so ausgestaltet sein, dass sie Datenelemente enthalten, die in einem Dateiformat vorliegen. Zum Beispiel kann ein Bild ein Datenelement sein und im JPEG-Format vorliegen. Datenelemente können aber auch kleinere Einheiten sein. Insbesondere kann dabei ein Dateiformat beispielsweise die den Datenelementen übergeordnete Struktur festlegen. Beispielsweise kann eine Datei im JSON-Format vorliegen und viele Datenelemente enthalten, wobei die Datenelemente selbst beispielsweise Textdaten enthalten.

Das Medium oder System 302, welches die Integrität der auf ihm gespeicherten Daten algorithmisch und/oder mathematisch absichert, kann ebenfalls Daten speichern und/oder erfassen. Das Medium oder System 302 umfasst dazu in einem Beispiel Mittel, welche zum Erfassen und/oder Speichern von Daten eingerichtet sind. Diese können Daten in flüchtiger oder nicht-flüchtiger Form erfassen und/oder speichern. Als Technologien kommen lediglich beispielhaft in Frage eine oder mehrere aus: Festplatten, Magnetspeicher, Solid State Drives (SSD), RAM, ROM, optische Speicher, Network Attached Storage (NAS), und vieles mehr. Da erfindungsgemäß die Integrität der gespeicherten Daten algorithmisch und/oder mathematisch abgesichert wird, sind im Allgemeinen sämtliche kontemporäre und zukünftige Speicher- und Datenverarbeitungstechnologien zur Verwendung mit der vorliegenden Erfindung zugänglich.

In einem Ausführungsbeispiel umfasst das Medium oder System 302, welches die Integrität der auf ihm gespeicherten Daten algorithmisch und/oder mathematisch absichert, eine Blockverkettung. Beispielsweise werden in der Blockverkettung auf dem Medium oder System 302 Hashwerte gespeichert, welche aus den Daten 301 oder einem Teil der Daten 301 erzeugt werden.

Häufig besteht zwischen den Daten 301 (oder einer die Daten 301 verarbeitenden Einheit, nicht eingezeichnet) eine Datenverbindung, beispielsweise ein Datenbus, eine Netzwerkverbindung, oder ähnliches. Beispielsweise kann die Verbindung (nicht eingezeichnet) auch über das Internet oder ein Intranet erfolgen.

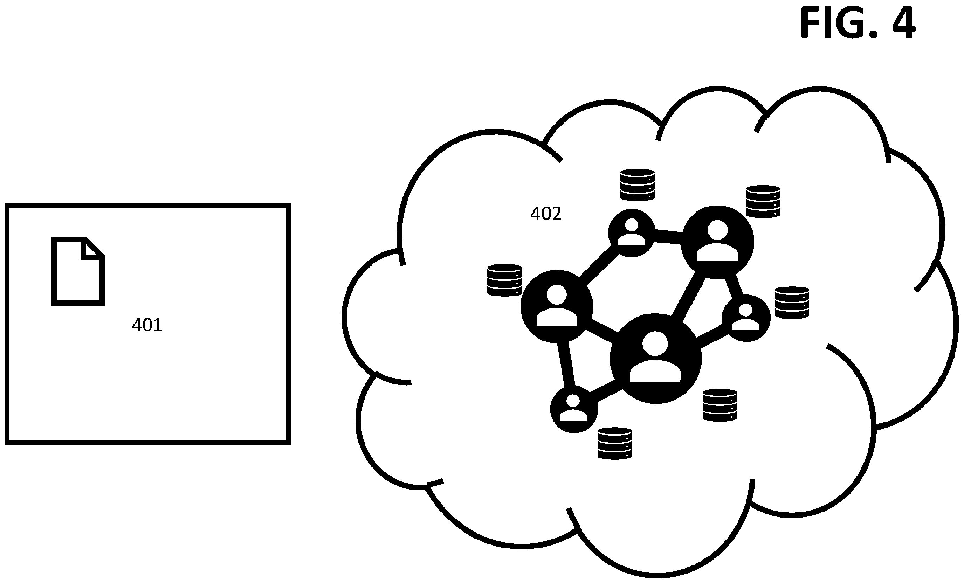

Die Fig. 4 zeigt eine schematische Darstellung einer Datenstruktur und eines Mediums oder Systems, welches die Integrität der auf ihm gespeicherten Daten algorithmisch und/oder mathematisch absichert, gemäß einer Ausführungsform der vorliegenden Erfindung. Die Datenstruktur 401 enthält Daten und entspricht im Wesentlichen der Datenstruktur 301 der Fig. 3. In diesem Ausführungsbeispiel umfasst das Medium oder System 402, welches die Integrität der auf ihm gespeicherten Daten algorithmisch und/oder mathematisch absichert, ein verteiltes System zur Sicherung der Daten, z.B. ein Distributed Ledger. Das verteilte System kann beispielsweise ein Computernetzwerk umfassen oder in ein solches eingebracht sein.

Das Medium oder System, welches die Integrität der auf ihm gespeicherten Daten algorithmisch und/oder mathematisch absichert, kann auch ein Blockverkettung umfassen, muss dies aber nicht. Vielmehr stellen die Blockverkettung und das verteilte System zwei voneinander unabhängige Ausgestaltungen des Mediums oder Systems, welches die Integrität der auf ihm gespeicherten Daten algorithmisch und/oder mathematisch absichert, dar. Das bedeutet insbesondere, dass diese beiden Ausgestaltungen sowohl unabhängig voneinander, als auch in Kombination, im Zusammenhang mit der vorliegenden Erfindung realisiert werden können.

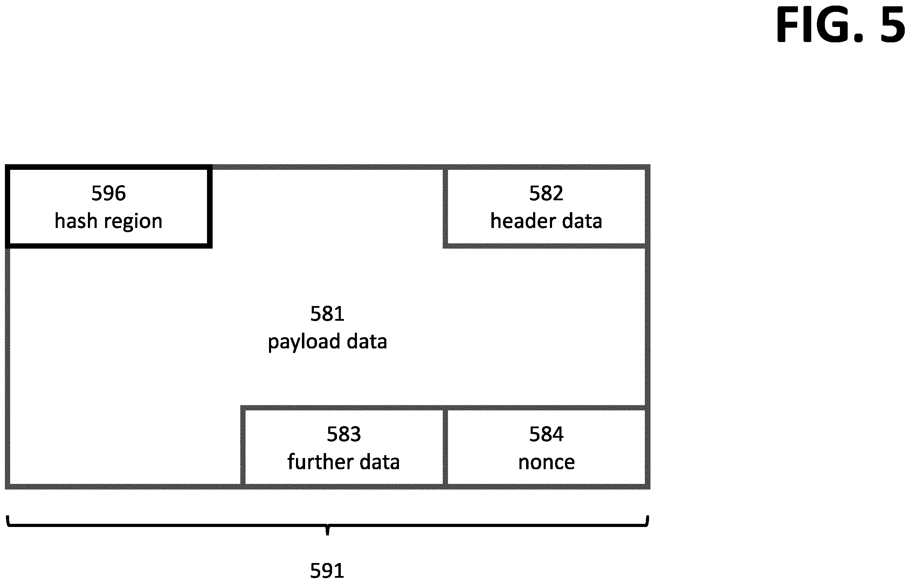

Die Fig. 5 zeigt eine beispielhafte Ausgestaltung eines Datenblocks für eine Blockverkettung, die geeignet ist für eine Verwendung im Zusammenhang mit der vorliegenden Erfindung. Der Datenblock 591 umfasst einen Hashbereich 596. In diesen Hashbereich kann unter anderem der Hashwert des vorhergehenden Blockes der Blockverkettung eingebracht werden, wenn der Datenblock 591 an eine bestehende Blockverkettung angebracht wird. Der Hashbereich 596 kann sich an beliebiger Stelle im Datenblock 591 befinden.

Der Datenblock 591 kann außerdem Nutzdaten 581 umfassen. Nutzdaten können beispielsweise und unter anderem auch Hashwerte umfassen, welche auf Basis einer Datenstruktur 301 erzeugt wurden.

Der Datenblock 591 kann außerdem Headerdaten 582 umfassen. Der Datenblock 591 kann außerdem weitere Daten 583 umfassen. Auch die Headerdaten 582 und die weiteren Daten 583 können sich jeweils an beliebiger Stelle im Datenblock 591 befinden.

Der Datenblock 591 kann außerdem eine Nonce 584 umfassen. Beispielsweise umfasst die Nonce 584 eine kryptographische "number only used once". In einem Beispiel mit Blockverkettung wird für jeden neuen Block eine feste oder variable Bedingung gestellt. Dabei wird die Nonce 584 so gewählt, dass die Bedingung erfüllt wird. In einem Beispiel ist die Bedingung an den Block eine Bedingung an einen Hashwert des Blockes. In einem Beispiel kann der Block nur die Blockverkettung angefügt werden, wenn die Bedingung erfüllt ist. In einem Beispiel entsteht durch die Schwierigkeit, die Nonce 584 so zu wählen, dass die Bedingung erfüllt ist, ein "Proof of Work". Dadurch wird die resultierende Blockverkettung besonders sicher gegenüber Angriffen mit Manipulationsabsichten.

Auch die Nonce 584 kann sich an beliebiger Stelle im Datenblock 591 befinden.

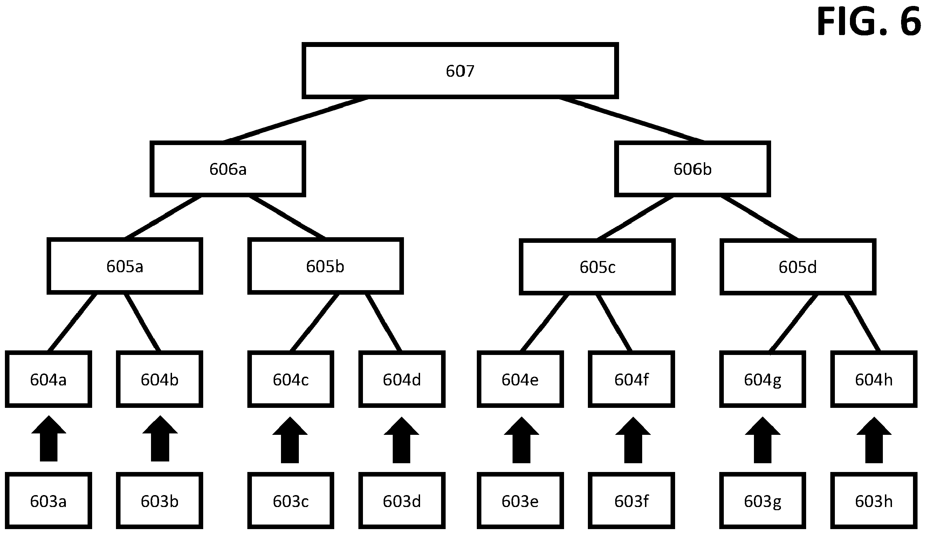

Die Fig. 6 zeigt eine allgemeine schematische Darstellung eines Hashbaumes oder Merkle-Trees zur Anwendung im Zusammenhang mit der vorliegenden Erfindung. An einem Ausführungsbeispiel wird im Folgenden eine mögliche Anwendung des Hashbaumes oder Merkle-Trees dargestellt.

Aus den Datenelementen 603a-h, die beispielsweise aus einer Datenstruktur 301 entnommen werden, werden beispielsweise jeweils Einzel-Hashwerte 604a-h (dargestellt als die Blätter des Hashbaumes) erzeugt. In diesem Beispiel ist der Hashbaum ein binärer Hashbaum, die Erfindung erschöpft sich hierin jedoch nicht. Die Einzel-Hashwerte werden rekursiv zu davon abgeleiteten Hashwerten wie beispielsweise Master-Hashwerten kombiniert. Beispielsweise können die Knoten 606a, 606b Master-Hashwerte beinhalten, die jeweils einer Instanz entsprechen. Sodann kann beispielsweise auch die Wurzel 607 des Baumes als Master-Hashwert aufgefasst werden.

Die Kombination von den auf Knoten lokalisierten Hashwerten zu dem auf dem Elternteil-Knoten lokalisierten Hashwert kann auf vielfältige Art und Weise geschehen. Beispielsweise wird die Konkatenation (sukzessive Aneinanderfügung) der auf den Knoten befindlichen Hashwerte gebildet und das Ergebnis erneut der Anwendung einer Hashfunktion unterzogen. So können beispielsweise im Binärbaum der Fig. 6 die Hashwerte der Knoten 605a und 605b aneinandergefügt werden, um auf das Ergebnis beispielsweise SHA256 anzuwenden und das Ergebnis im Knoten 606a zu hinterlegen.

Sämtliche Datenelemente 603a-h können Nutzdatenelemente (wie "John" und "Doe") sein, müssen es aber nicht. Es können auch Seeds/Salts darunter sein. Beispielsweise können die Datenelemente 603a, 603c, 603e, 603g Nutzdatenelemente sein, während die Datenelemente 603b, 603d, 603f, 603h Seeds/Salts beinhalten. Wenn sämtliche Datenelemente 603a-h Nutzdatenelemente umfassen, können beispielsweise die Hashwerte 604a-h als Einzel-Hashwerte zu den Nutzdatenelementen angesehen werden. Wenn die Datenelemente 603b, 603d, 603f, 603h Seeds/Salts beinhalten, können beispielsweise die Hashwerte 605a-d als Einzel-Hashwerte angesehen werden.

Der Hashbaum kann in einem Computerspeicher als Baumstruktur realisiert werden. Jedoch können ebenso andere Datenstrukturen zum Einsatz kommen, welche in der Lage sind, eine solche Baumstruktur abzubilden. Beispielsweise kann dies durch den Einsatz einer Liste oder verschiedener Listen geschehen.

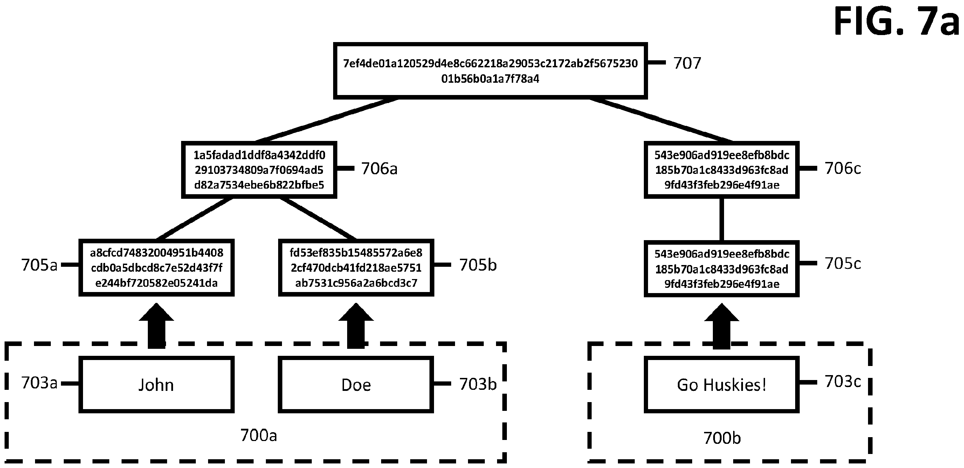

Konkrete einfache Varianten der Anwendung eines Hashbaumes oder Merkle-Trees werden im Zusammenhang mit den Figuren 7a, 7b, 8 - 10 diskutiert.

Die Fig. 7a zeigt ein konkretes Beispiel für die Anwendung eines Hashbaumes oder Merkle-Trees im Zusammenhang mit der vorliegenden Erfindung. Beispielsweise kann eine solche Baumstruktur bei einem Verfahren zum Speichern oder Sichern von Daten einer Datenstruktur nach Anspruch 1 oder einem Verfahren zum Verifizieren von Daten innerhalb einer Datenstruktur nach Anspruch 20 zum Einsatz kommen.

Eine erste Instanz 700a umfasst zwei Datenelemente 703a, 703b. Eine zweite Instanz umfasst ein Datenelement 703c. Aus den Datenelementen 703a-c werden beispielsweise mit SHA256 Einzel-Hashwerte 705a-c berechnet. Der Master-Hashwert 706a für die erste Instanz wird in diesem Beispiel durch Anwendung von SHA256 auf die Konkatenation der Einzel-Hashwertes 705a und 705b erzeugt. Der Master-Hashwert 706b für die zweite Instanz ist in diesem Beispiel unmittelbar durch den Einzel-Hashwert 705b gegeben. Dies ist möglich, da die zweite Instanz in diesem Beispiel nur ein Datenelement 703c enthält.

Ein Master-Hashwert 707 wird analog erzeugt, der demnach sowohl der ersten als auch der zweiten Instanz übergeordnet ist.

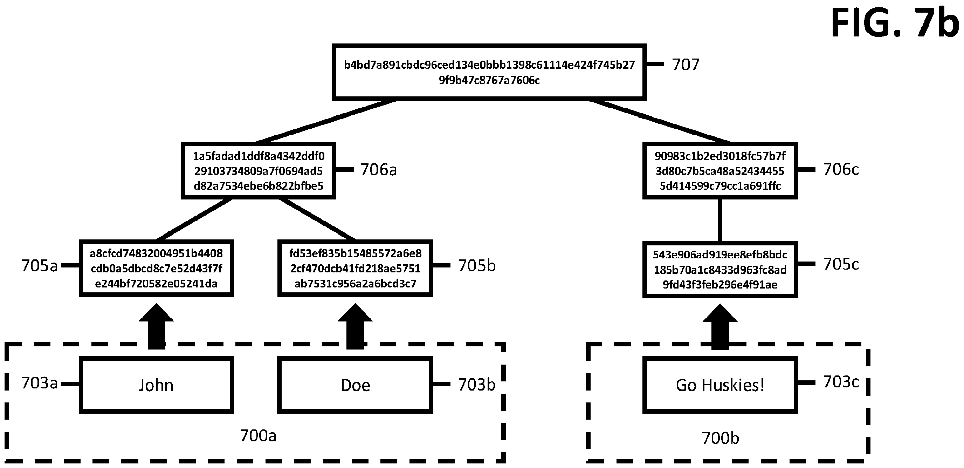

Die Fig. 7b zeigt ein weiteres konkretes Beispiel für die Anwendung eines Hashbaumes oder Merkle-Trees im Zusammenhang mit der vorliegenden Erfindung, welches sich von dem Beispiel in Fig. 7a lediglich geringfügig unterscheidet. Daher wird der Unterschied diskutiert und im übrigen auf die obige Diskussion verwiesen. In diesem Beispiel wird der Master-Hashwert 706c erzeugt, indem auf den Hashwert 705c abermals SHA256 angewandt wird.

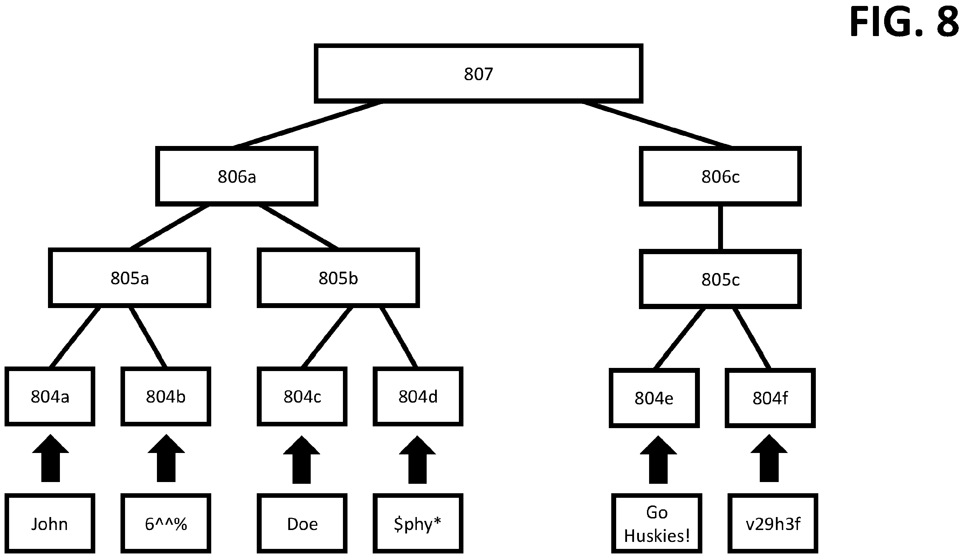

Die Fig. 8 zeigt eine weitere schematische Darstellung eines Hashbaumes oder Merkle-Trees zur Anwendung im Zusammenhang mit der vorliegenden Erfindung im Rahmen eines konkreten Beispiels mit Seeds/Salts.

Die Blätter 804a, 804c, 804e enthalten Hashwerte der Datenelemente "John", "Doe" und "Go Huskies!". Die Blätter 804b, 804d, 804f enthalten Hashwerte der Seeds/Salts wie in der Figur angegeben. Durch den Einsatz der Seeds/Salts werden insbesondere Wörterbuchangriffe erschwert, wie in der Beschreibung der Erfindung diskutiert wurde. Die Hashwerte 804a, 804c, 804e der Datenelemente werden nun mit den Hashwerten der Seeds/Salts kombiniert (wie beispielsweise weiter oben diskutiert), um daraus Einzel-Hashwerte 805a-c für die Datenelemente und daraus sukzessive Master-Hashwerte 806a, 806c, 807 zu generieren.

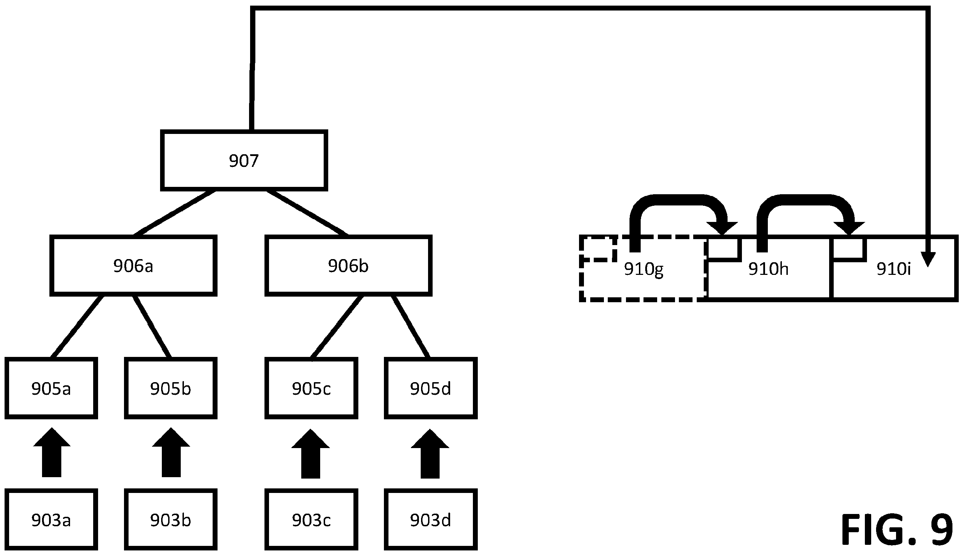

Die Fig. 9 zeigt eine schematische Darstellung eines Hashbaumes oder Merkle-Trees und einen Ausschnitt aus einer Blockverkettung zur Anwendung im Zusammenhang mit der vorliegenden Erfindung. In diesem Beispiel erfolgt die Erzeugung eines Master-Hashwertes 907 beispielsweise wie bereits weiter oben diskutiert wurde.

Die drei Datenblöcke 910g, 910h, 910i sind beispielsweise die letzten drei Datenblöcke (das "Ende") einer Blockverkettung. Der Datenblock 910g ist durch gestrichelte Linien dargestellt, um zu verdeutlichen, dass weitere Datenblöcke dem Datenblock 910g vorangehen können. Der Datenblock 910i nimmt nun beispielsweise den Master-Hashwert 907 in seinem Nutzdatenbereich auf, um ihn vor zukünftiger Manipulation sicher abzulegen, wie durch einen Pfeil in der Figur symbolisiert ist.

Der Datenblock 910i muss außerdem zu diesem Zeitpunkt noch nicht fester Bestandteil der Blockverkettung sein.

Die Erfindung ist aber auch keineswegs darauf beschränkt nur einen Master-Hashwert beispielsweise in einer Blockverkettung zu sichern. Insbesondere ist die Erfindung keineswegs darauf beschränkt nur die Wurzel des Merkle-Trees beispielsweise in einer Blockverkettung zu sichern. In einem Beispiel kann neben dem Master-Hashwert 907 auch der Master-Hashwert 906a beispielsweise in einer Blockverkettung gesichert werden.

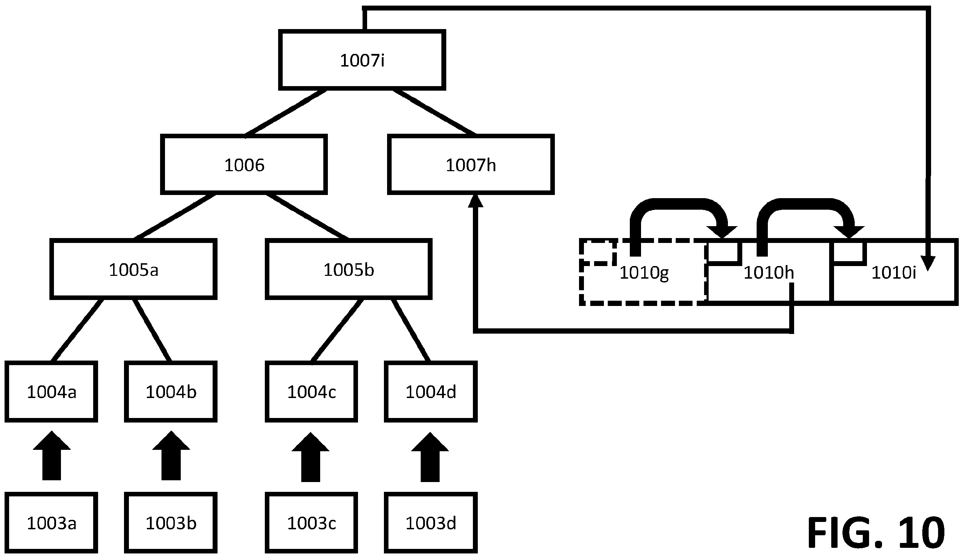

Die Fig. 10 zeigt eine schematische Darstellung eines Hashbaumes oder Merkle-Trees und einen Ausschnitt aus einer Blockverkettung zur Anwendung im Zusammenhang mit der vorliegenden Erfindung, welche sich von dem Beispiel in Fig. 9 lediglich geringfügig unterscheidet. Daher wird der Unterschied diskutiert und im übrigen auf die obige Diskussion verwiesen.

In Fig. 10 wird ein Master-Hashwert 1006 aus Datenelementen erzeugt. Dieser wird mit einem vorhergehenden Hashwert 1007h kombiniert, um einen weiteren Master-Hashwert 1007i zu erhalten. Sodann wird insbesondere der weitere Master-Hashwert 1007i im Datenblock 1010i der Blockverkettung gesichert. Der vorhergehende Hashwert 1007h entstammt beispielsweise dem Block 1010h, es kann aber auch ein vorhergehende Hashwert 1007h beispielsweise aus einem weiter oder deutlich weiter zurückliegenden Block entnommen werden.

In einem Beispiel werden zu Daten, welche sich über einen Zeitraum hinweg verändern, kontinuierlich Master-Hashwerte gesichert. Beispielsweise ändert sich so der Master-Hashwert 1006 (und auch der weitere Master-Hashwert 1007i), wenn eines der Datenelemente 1003a-d geändert wird. Beispielsweise wurde zu einem ersten Zeitpunkt, welcher der Darstellung der Blockverkettung in Fig. 10 zeitlich vorangeht, ein weiterer Master-Hashwert 1007i auf Basis der Datenelemente 1003a-d erzeugt und in dem Block 1010h abgelegt. Nun kann zu einem späteren Zeitpunkt (dargestellt in Fig. 10) der damals abgelegte Hashwert aus Block 1010h ausgelesen werden und sodann als vorhergehender Hashwert 1007h zum Einsatz gebracht werden.

Die Erfindung ist aber keineswegs auf dieses Szenario beschränkt. Bei den vorhergehenden Hashwert 1007h kann es sich auch um einen anderen Hashwert, beispielsweise um einen Hashwert auf Grundlage völlig anderer Daten, handeln.

Logisch entsteht hierdurch ein weiterer Verkettungsmechanismus, zusätzlich zu der Verkettung, welche die Blockverkettung selbst bereits bereitstellt. Durch diese "Blockchain in the blockchain" wird das System noch sicherer gegenüber Angriffen, insbesondere Angriffen mit Manipulationsabsichten.

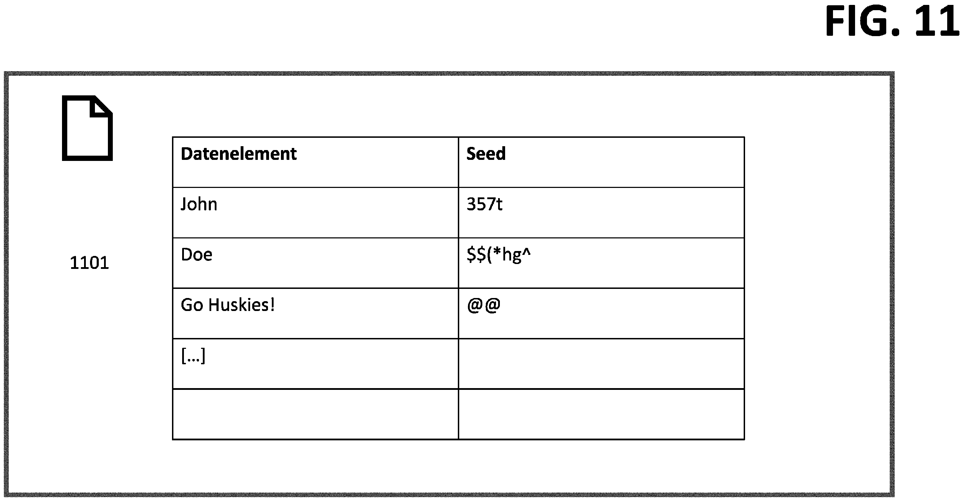

Die Fig. 11 zeigt ein einfaches Beispiel für eine Datenstruktur. Eine Datenstruktur kann Datenelemente und diesen Datenelementen zugeordnete Seed/Salt-Werte umfassen. Lediglich beispielhaft und symbolisch ist eine Tabelle dargestellt. Die tatsächliche Datenstruktur in keineswegs darauf beschränkt.

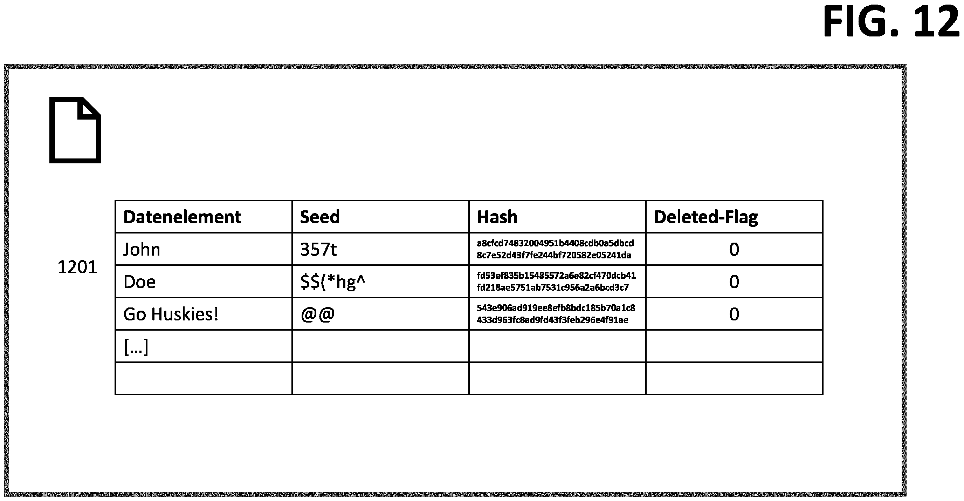

Die Fig. 12 zeigt ein weiteres einfaches Beispiel für eine Datenstruktur. Die Datenstruktur umfasst Hashwerte und Deleted-Flags. Die Hashwerte können die SHA256-Hashwerte der Datenelemente sein. Es können aber auch Hashwerte sein, die durch Kombination von datenelementbasierten und seed/saltbasierten Hashwerte erzeugt wurden (siehe weiter oben). Die Deleted-Flags können Auskunft darüber geben, ob ein Datenelement bereits gelöscht wurde. Beispielsweise kann der Wert 1 bedeuten, dass das Datenelement gelöscht wurde, während der Wert 0 bedeuten kann, dass das Datenelement nicht gelöscht wurde, sondern existiert.

Lediglich beispielhaft und symbolisch ist eine Tabelle dargestellt. Die tatsächliche Datenstruktur ist keineswegs darauf beschränkt.

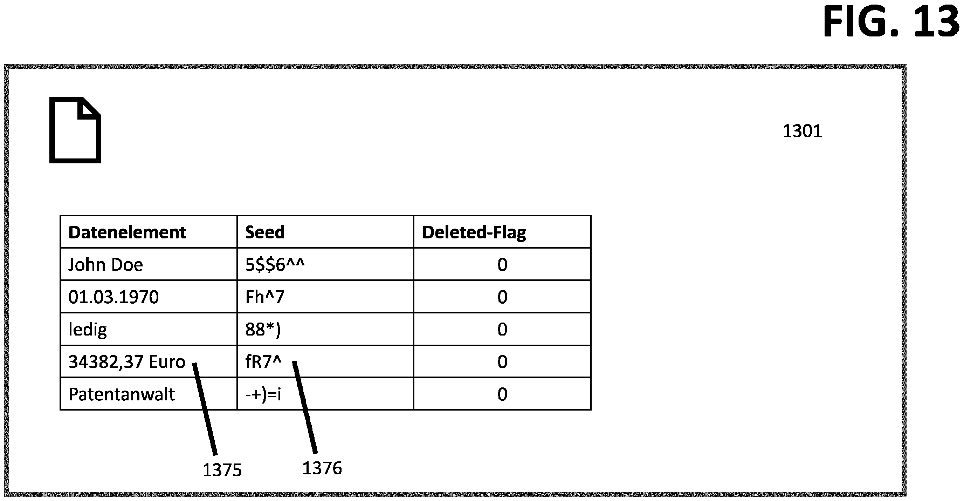

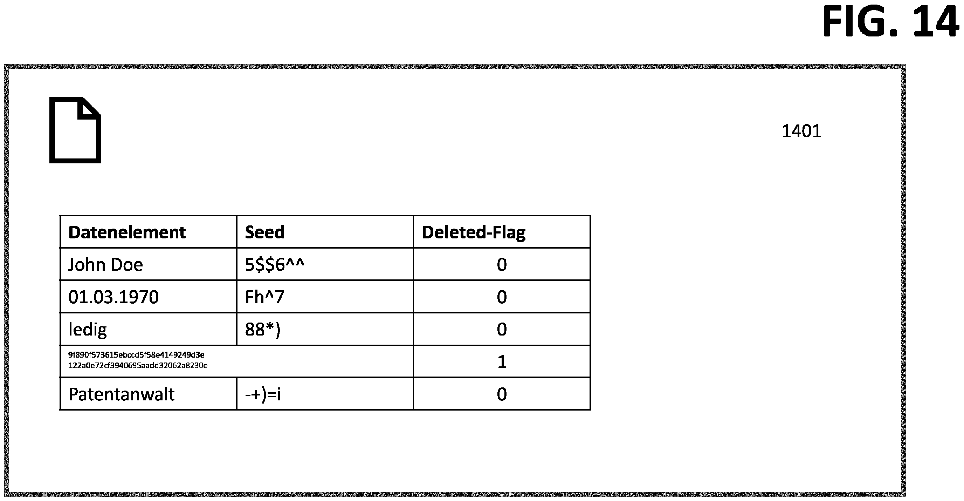

Die Figuren 13 und 14 zeigen ein weiteres einfaches Beispiel für eine Datenstruktur und illustrieren den Vorgang des Löschens von Daten am Beispiel eines einzelnen Datenelements.

In Figur 13 existiert das Datenelement 1375 mit dem Inhalt "34382,37 Euro". Beispielsweise könnte dies einen Kontostand symbolisieren, welcher im Folgenden aus Datenschutzgründen gelöscht werden soll. Der Seed/Salt 1376 des zu löschenden Datenelements 1375 ist durch "fR7^"gegeben.

In Figur 14 wurde das Datenelement durch einen Hash ersetzt. In diesem Beispiel wurden das Datenelement "34382,37 Euro" und sein Seed/Salt "fR7^" durch den kombinierten Einzel-Hashwert ersetzt. Speziell wurde in diesem Beispiel SHA256-Hashwerte für das Datenelement als auch den Seed berechnet, und das Datenelement und sein Seed/Salt wurden durch den Hash der Konkatenation beider Werte ersetzt. Der Hash des Datenelements ist 967b2d9e49f4c7fde0b0fa08422eecfd51e0d943381e577ea9cef8fcbeb7611a, der Hash des Seeds/Salts ist ae44ce039deb375239c6b50e6fc5c6ce5fa3e470c97b5fa498baf8fb17a04dea und der Hash der Konkatenation ist 9f890f573615ebccd5f58e4149249d3e122a0e72cf3940695aadd32062a8230e.

In einem anderen Beispiel wird der Seed direkt an den Hash des Datenelements angehängt. Es wird also SHA256 auf 967b2d9e49f4c7fde0b0fa08422eecfd51e0d943381e577ea9cef8fcbeb7611afR7^ angewandt und das Ergebnis ist 7921783fed167238a90303aeed14eb8cb132a4173c63017f58908f330659bdc3. Dieses Beispiel ist jedoch in der Figur nicht dargestellt.

Das Deleted-Flag wurde auf 1 gesetzt.

Durch das Ersetzen ist das Datenelement nun datenschutzkonform gelöscht, es kann von berechtigten Dritten jedoch immer noch verifiziert werden. Insbesondere können die übrigen Datenelemente in Zukunft verifiziert werden, und dies kann insbesondere beispielsweise auf Basis eines Master-Hashwertes geschehen, welcher beispielsweise in einer Blockverkettung gesichert wurde.

Das Verfahren kann auch direkt mit Einzel-Hashwerten ohne Seeds/Salts durchgeführt werden. In einem anderen Beispiel kommen Seeds/Salts zum Einsatz, jedoch wird nur das Datenelement selbst durch einen Hashwert ersetzt.

In einem anderen Beispiel können auch mehrere Datenelemente gelöscht werden. In einem Beispiel mit mehreren Datenelementen wird jedes Datenelement durch einen Hashwert ersetzt.

In einem anderen Beispiel, bei dem mehrere Datenelemente gelöscht werden sollen, entsprechen die zu löschenden Datenelemente bzw. deren Hashwerte sämtlichen Blättern eines Unterbaumes eines Hashbaumes. Beispielsweise können in einer solchen Situation auch sämtliche Datenelemente durch einen einzigen Master- oder Einzel-Hashwert ersetzt werden.

In einem Beispiel werden zwei Datenelemente gelöscht, welche Hashwerten in einem binären Hashbaum entsprechen, welche auf benachbarten Blättern liegen und dabei Kinder eines gemeinsamen Elternteil-Knotens sind. Beispielsweise können dann auch beide Datenelemente derart gelöscht werden, dass beide Datenelemente durch einen Hashwert ersetzt werden, welcher dem gemeinsamen Elternteil-Knoten des Hashbaumes entspricht.

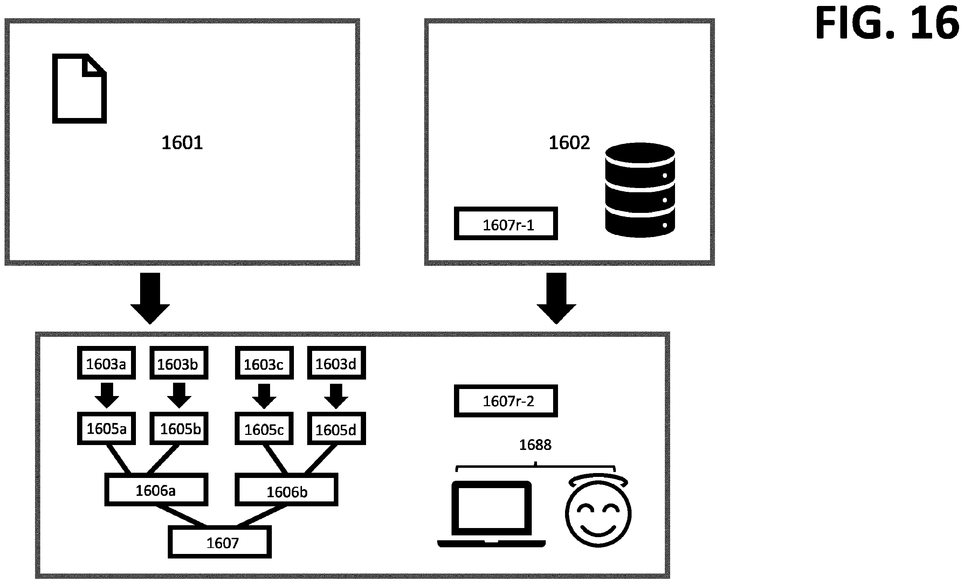

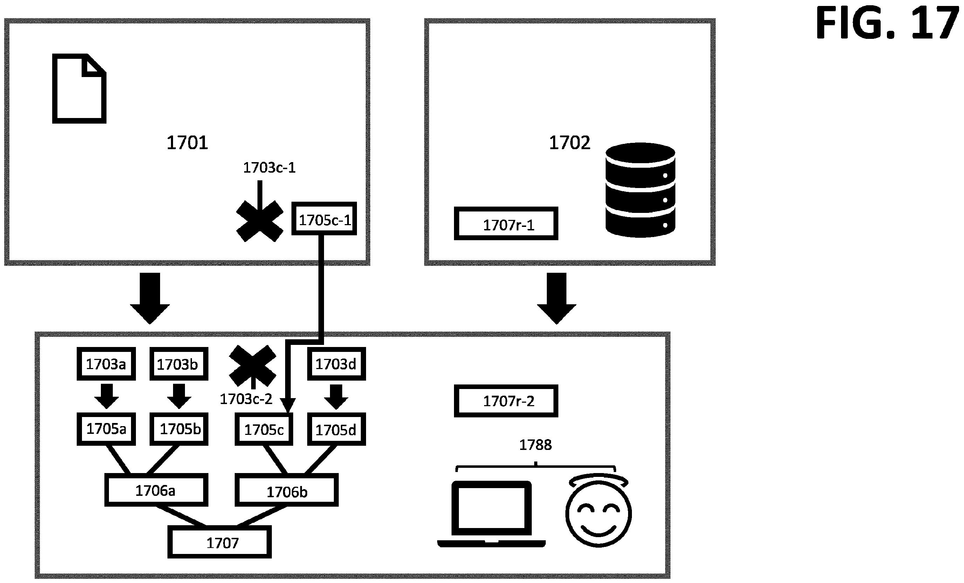

Es wird außerdem auf die Figuren 16 und 17 verwiesen, in deren Zusammenhang das Verifizieren beispielhaft beschrieben wird.

Lediglich beispielhaft und symbolisch ist eine Tabelle dargestellt. Die tatsächliche Datenstruktur ist keineswegs darauf beschränkt.

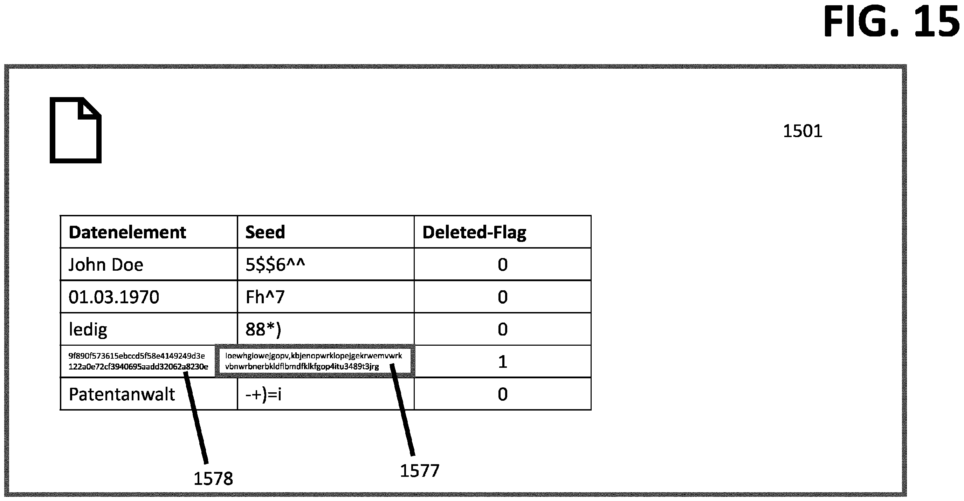

Die Fig. 15 zeigt ein weiteres einfaches Beispiel für eine Datenstruktur, welches der Struktur der Figur 14 im Zusammenhang mit den Löschen eines Datenelements ähnelt.

In einem Beispiel ist der Hashwert, durch den ein Datenelement (und beispielsweise sein Seed/Salt) ersetzt wird, kleiner als das Datenelement selbst. In diesem Beispiel werden daher übrige Regionen der Datenstruktur, die nicht durch den erzeugten Hashwert belegt werden, mehrfach und/oder durch randomisierte Daten 1577 überschrieben.

Dadurch ist das Löschen besonders gründlich und sicher und genügt höchsten Datenschutzansprüchen.

Lediglich beispielhaft und symbolisch ist eine Tabelle dargestellt. Die tatsächliche Datenstruktur ist keineswegs darauf beschränkt.

Die Fig. 16 zeigt ein einfaches Beispiel eines Verifizierens von Daten im Rahmen der vorliegenden Erfindung.

In der Figur sind eine Datenstruktur 1601 und ein Medium oder System 1602, welches die Integrität der auf ihm gespeicherten Daten algorithmisch und/oder mathematisch absichert, dargestellt. Das Medium oder System 1602, welches die Integrität der auf ihm gespeicherten Daten algorithmisch und/oder mathematisch absichert, umfasst in diesem Beispiel einen Referenz-Master-Hashwert 1607r-1.

In diesem Beispiel möchte ein Anwender 1688 gewisse Daten aus der Datenstruktur 1601 mittels des Mediums oder Systems 1602 verifizieren. Der Anwender 1688 kann beispielsweise einen Benutzer in Form einer natürlichen Person und einen Computer umfassen. Der Benutzer ist durch einen Smilie dargestellt. Der Anwender 1688 kann aber auch ein rein elektronisches Computersystem und/oder Teil beispielsweise eines Unternehmens sein. In einem weiteren Beispiel umfasst der Anwender 1688 eine künstliche Intelligenz. Die Erfindung ist hier in keinerlei Hinsicht beschränkt.

In dem dargestellten Beispiel bezieht der Anwender 1688 die Datenelemente 1603a-d aus der Datenstruktur 1601 und möchte diese verifizieren. Nun kann der Anwender beispielsweise Hashwerte 1605a-d auf Basis der Datenelemente berechnen und diese Hashwerte 1605a-d sukzessive auf beispielsweise einen Master-Hashwert 1607 reduzieren.

Der Anwender bezieht außerdem einen Referenz-Master-Hashwert 1607r-2 durch Auslesen eines Referenz-Master-Hashwertes 1607r-1 aus dem Medium oder System 1602, welches die Integrität der auf ihm gespeicherten Daten algorithmisch und/oder mathematisch absichert.

In der Figur ist in dem Medium oder System 1602, welches die Integrität der auf ihm gespeicherten Daten algorithmisch und/oder mathematisch absichert, lediglich ein einzelner Referenz-Master-Hashwert 1607r-1 dargestellt. Das Medium oder System 1602, welches die Integrität der auf ihm gespeicherten Daten algorithmisch und/oder mathematisch absichert, kann aber beispielsweise auch problemlos mehrere Referenz-Master-Hashwerte umfassen.

Der Anwender 1688 kann nun den Referenz-Master-Hashwert 1607r-2 mit dem von ihm selbst erzeugten Master-Hashwert 1607 vergleichen, und dadurch feststellen, ob die von ihm aus der Datenstruktur 1601 bezogenen Datenelemente 1603a-d Integrität genießen oder ob diese manipuliert wurden.

Der Benutzer ist sehr erfreut darüber, dass er auf das erfindungsgemäße Verfahren zurückgreifen kann, weshalb er in der Figur 16 fröhlich lächelt.

Das hier dargestellte Beispiel ist lediglich als sehr einfaches Beispiel zu betrachten und kann insbesondere durch sämtliche andere offenbarte Erweiterungen und Weiterbildungen ergänzt werden. Beispielsweise ist die Kombination dieses Beispiels mit dem Einsatz von Seeds/Salts problemlos möglich.

Die Fig. 17 zeigt ein weiteres einfaches Beispiel eines Verifizierens von Daten im Rahmen der vorliegenden Erfindung. Daher wird der Unterschied zu dem Fall der Fig. 16 diskutiert und im übrigen auf die obige Diskussion verwiesen.

In diesem Beispiel wurde ein Datenelement 1703c-1 aus der Datenstruktur 1701 erfindungsgemäß nachträglich gelöscht. Das Datenelement 1703c-1 ist daher in der Datenstruktur 1701 nicht mehr vorhanden, was durch das schwarze Kreuz symbolisiert ist. In diesem Beispiel existiert in der Datenstruktur 1701 jedoch ein Einzel-Hashwert 1705c-1, welcher auf Grundlage des ehemaligen Datenelements 1703c-1 beim Löschen desgleichen erzeugt worden ist.

Der Anwender 1788 möchte nun die übrigen Datenelemente 1703a, 1703b, 1703d aus der Datenstruktur 1701 beziehen und diese verifizieren. Zusätzlich zu den Datenelementen 1703a, 1703b, 1703d bezieht er daher, in diesem Beispiel ebenfalls aus der Datenstruktur 1701, den Hashwert 1705c-1 wie in der Figur 17 durch einen Pfeil eingezeichnet. Dadurch erhält er im Ergebnis denselben Master-Hashwert 1707 (d.h. beispielsweise identisch zum Master-Hashwert 1607) und kann die übrigen Datenelemente 1703a, 1703b, 1703d verifizieren, ohne das ursprüngliche Datenelement 1703c-2 zu haben oder dafür zu benötigen.

Der Benutzer ist abermals sehr erfreut darüber, dass er auf das erfindungsgemäße Verfahren zurückgreifen kann, weshalb er auch in der Figur 17 fröhlich lächelt.

Das hier dargestellte Beispiel ist lediglich als sehr einfaches Beispiel zu betrachten und kann insbesondere durch sämtliche andere offenbarte Erweiterungen und Weiterbildungen ergänzt werden. Beispielsweise ist die Kombination dieses Beispiels mit dem Einsatz von Seeds/Salts problemlos möglich.

In einem anderen Beispiel wurden mehrere Datenelemente gelöscht. Wenn beispielsweise (nicht dargestellt) die Datenelemente 1703c und 1703d gelöscht wurden und dabei gemeinsam durch einen im Hashbaum höhergeordneten Hashwert (beispielsweise 1706b) ersetzt wurden, so kann beispielsweise auch ein Hashwert 1706b zum Verifizieren der übrigen Datenelemente direkt der Datenstruktur 1701 entnommen werden. In einer solchen Situation ist dann beispielsweise weder ein Entnahme eines Hashwertes 1705c-1 noch eines Hashwert 1705d erforderlich, sondern das Verfahren zum Verifizieren kann direkt auf Grundlage des Hashwertes 1706b durchgeführt werden.

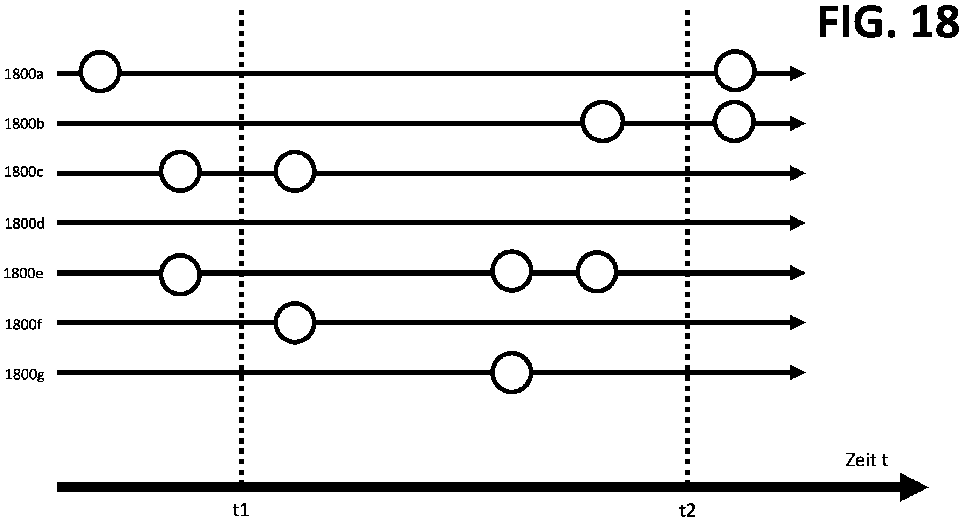

Die Figuren 18 - 20 verdeutlichen verschiedene weitere beispielhafte Aspekte im Zusammenhang mit der Erfindung. Diese haben besondere Relevanz im Hinblick auf ein Verfahren zum Speichern oder Sichern von Daten einer Datenstruktur, und insbesondere im Zusammenhang mit einem Verfahren zum systematischen Erhalt der Integrität einer Datenstruktur.

Eine Koordinatenachse, welche einen Verlauf wie beispielsweise einen Zeitverlauf darstellen kann, verläuft in der Darstellung horizontal von links nach rechts.

Die Achsen 1800a-g beziehen sich auf bestimmte Mengen von Daten. Beispielsweise, aber nicht notwendigerweise, handelt es sich dabei um Instanzen. Die Kreissymbole auf den Instanzenachsen 1800a-g verdeutlichen in diesem Beispiel eine bestimmte Instanz zu einem bestimmten Zeitpunkt. Insbesondere stellen die Kreise symbolisch dar, dass die Daten der entsprechenden Instanz zu diesem Zeitpunkt erzeugt oder geändert wurden. Insbesondere kann eine Instanz zu diesem Zeitpunkt erzeugt worden sein, oder es wurden Daten in der Instanz hinzugefügt oder geändert. Auch kann, im Zusammenhang mit der vorliegenden Erfindung, eine Instanz zu einem bestimmten Zeitpunkt als Instanz im Sinne der Erfindung aufgefasst werden. Beispielsweise kann so sogar eine Instanz zu unterschiedlichen Zeitpunkten als unterschiedliche Instanzen aufgefasst werden. Infolgedessen können auch die Kreissymbole selbst Instanzen entsprechen.

Daten und insbesondere Instanzen können im Zusammenhang mit der Erfindung auf Grundlage unterschiedlicher Schemata und Auswahlverfahren gesichert werden.

In einem Beispiel kommt ein Verfahren zum systematischen Erhalt der Integrität einer Datenstruktur zur Anwendung.

Beispielsweise können Instanzen, die den sechs Kreissymbolen der Fig. 18 im Intervall [t1,t2] entsprechen, als Grundlage zur Erzeugung und Sicherung eines Master-Hashwertes genutzt werden.

In einem anderen Beispiel wird lediglich die aktuellste Instanz einer Instanzenachse gesichert. Die Instanzen der Achse 1800e wurde im Intervall [t1,t2] zweimal geändert. In einem Beispiel wird nur die aktuellere Instanz, d.h. die dem rechten Kreissymbol entsprechende Instanz, zur Erzeugung und Sicherung eines Master-Hashwertes genutzt. Infolgedessen werden dann beispielsweise nur fünf Instanzen zur Erzeugung und Sicherung eines Master-Hashwertes genutzt.

Wird eine Instanz geändert, so kann im Zusammenhang mit der Erfindung ebenfalls lediglich die Änderung als neue Instanz aufgefasst werden (vergleiche "inkrementelles Backup"). Das muss aber keineswegs der Fall sein. In einem weiteren Beispiel werden auch unveränderte Daten, oder ein Teil davon, redundant gesichert. Die Erfindung ist unabhängig von der genauen Wahl der Schemata und kann mit sämtlichen Schemata kombiniert und ausgeführt werden.

In einem weiteren Beispiel werden für Instanzen, wenn Instanzen in dem bestimmten Zeitintervall nicht geändert wurden, ältere Versionen der Instanzen, insbesondere die zeitlich jüngste existente Version, ausgewählt und zur Erzeugung und Sicherung eines Master-Hashwertes genutzt, auch wenn diese Instanzen außerhalb des bestimmten Zeitintervalls liegen.

In einem weiteren Beispiel wird eine bestimmte Anzahl an Instanzen in einem bestimmten Zeitintervall ausgewählt. In einem weiteren Beispiel wird die Länge des Zeitintervalls so angepasst, dass eine bestimmte Anzahl an zu berücksichtigenden Instanzen in dem so bestimmten Zeitintervall liegt.

Die verschiedenen Aspekte dieser Schemata lassen sich im Zusammenhang mit der Erfindung aber auch zu einem hier nicht explizit angeführten Schema kombinieren.

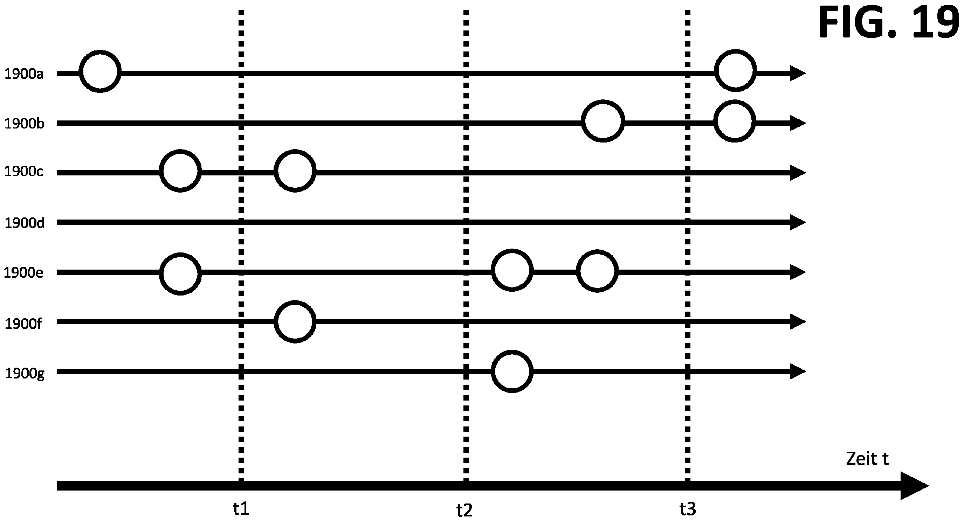

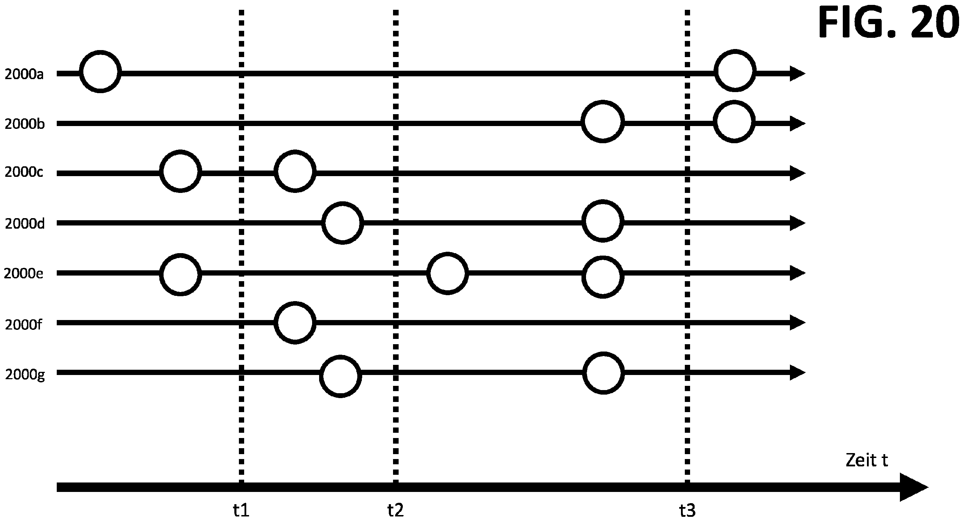

Die Figuren 19 und 20 verdeutlichen verschiedene weitere beispielhafte Aspekte im Zusammenhang mit der Erfindung. Die Zeitintervalle, die zur Sicherung der Datenintegrität genutzt werden, können unterschiedlich sein. Sie können regelmäßig oder auch unregelmäßig sein. Die im Zusammenhang mit der Figur 18 angeführten Auswahlschemata, oder Kombinationen davon, können auch in den Beispielen der Figuren 19 und 20 analog zum Einsatz gebracht werden.

## Patentansprüche

1. **Verfahren zum Speichern oder Sichern von Daten einer Datenstruktur (301),** umfassend die folgenden Schritte:
a) Auswählen (S01) von einer ersten Instanz (700a), welche sich in der Datenstruktur (301) befindet und zumindest ein erstes Datenelement (703a, 703b) umfasst, und Auswählen (S01) von zumindest einer zweiten Instanz (700b), welche sich in der Datenstruktur (301) befindet und zumindest ein zweites Datenelement (703c) umfasst,
b) Berechnen (S02) von Einzel-Hashwerten (705a-c) auf Basis der jeweiligen Datenelemente (703a-c) innerhalb der entsprechenden Instanzen,
c) Erzeugen (S03) mindestens eines Master-Hashwertes (706a, 706c, 707) auf Basis der Einzel-Hashwerte, und
d) Sichern (S04) eines Master-Hashwertes (706a, 706c, 707) in einem Medium oder System (302), welches die Integrität der auf ihm gespeicherten Daten algorithmisch und/oder mathematisch absichert.

2. Verfahren nach Anspruch 1, wobei der Schritt des Sicherns (S04) ein Sichern auf einem verteilten Computersystem, insbesondere einem Blockchain-basierten System, insbesondere einem Distributed Ledger, umfasst, wobei das verteilte Computersystem privat oder öffentlich zugänglich sein kann.

3. Verfahren nach Anspruch 1 oder 2, wobei der Schritt des Auswählens (S01) folgendes umfasst:
a) Bestimmen eines Zeitintervalls Δt innerhalb der Datenstruktur (301) und
b) Auswählen der Instanzen (700a, 700b) innerhalb des bestimmten Zeitintervalls Δt; und/oder
Auswählen einer definierten Anzahl an Instanzen (700a, 700b).

4. Verfahren nach Anspruch 3, wobei Instanzen ausgewählt werden, welche in dem bestimmten Zeitintervall Δt hinzugefügt oder geändert wurden.

5. Verfahren nach Anspruch 3 oder 4, wobei die Instanzen in dem bestimmten Zeitintervall Δtₙ aus einander zeitlich überlappenden Zeitintervallen ausgewählt werden.

6. Verfahren nach einem der vorhergehenden Ansprüche, wobei der Schritt des Erzeugens (S03) eine Reduktion der Anzahl der Hashwerte, insbesondere eine rekursive oder sukzessive Reduktion, umfasst.

7. Verfahren nach einem der vorhergehenden Ansprüche, wobei der Schritt des Erzeugens (S03) ein Erzeugen einer Baumstruktur oder einer gleichwertigen Datenstruktur, welche eine Baumstruktur abbilden kann, auf Basis der Hashwerte umfasst.

8. Verfahren nach Anspruch 7, wobei die Baumstruktur oder gleichwertige Datenstruktur einen Merkle-Tree abbildet.

9. Verfahren nach Anspruch 7 oder 8, wobei ein Master-Hashwert auf Basis der Wurzel (607) der Baumstruktur oder der gleichwertigen Datenstruktur erzeugt wird.

10. Verfahren nach einem der vorhergehenden Ansprüche, wobei das Erzeugen (S03) eines Master-Hashwertes (1007i) außerdem auf Basis mindestens einer weiteren Instanz (1007h) geschieht.

11. Verfahren nach Anspruch 10, wobei die weitere Instanz (1007h) eine bereits in dem Medium oder System, welches die Integrität der auf ihm gespeicherten Daten algorithmisch und/oder mathematisch absichert, gesicherte Instanz (1007h) umfasst.

12. Verfahren nach Anspruch 11, wobei die bereits gesicherte Instanz (1007h) einen vorhergehenden oder älteren Hashwert oder Master-Hashwert (1007h) umfasst.

13. Verfahren nach einem der vorhergehenden Ansprüche, wobei beim Schritt des Sicherns (S04) eines Master-Hashwertes außerdem zusätzlich ein Zeitstempel gesichert wird.

14. Verfahren nach einem der vorhergehenden Ansprüche, wobei die Datenelemente innerhalb einer Instanz Zeitstempel umfassen.

15. Verfahren nach einem der vorhergehenden Ansprüche, wobei der Schritt des Berechnens (S02) eines Hashwertes auf Basis einer Struktur, welche das Datenelement und ein weiteres Datenelement, insbesondere einen Seed/Salt, umfasst, erfolgt.

16. **Verfahren zum Löschen eines Datenelements aus einer Datenstruktur (1301, 1401),** umfassend die folgenden Schritte:
a) Berechnen (L01) eines Hashwertes (1578) mindestens auf Basis des zu löschenden Datenelements (1375) innerhalb einer Instanz (700a, 700b), und
b) Ersetzen (L02) des Datenelements (1375) in der Datenstruktur durch den berechneten Hashwert (1578).

17. Verfahren nach Anspruch 16, wobei das Berechnen (L01) des Hashwertes (1578) auf Basis einer Datenstruktur, welche das Datenelement (1375) und ein weiteres Element, insbesondere einen Seed/Salt (1376), umfasst, geschieht.

18. Verfahren nach Anspruch 16 oder 17, wobei das Ersetzen ein zumindest teilweises Überschreiben des ursprünglichen Datenelements in der Datenstruktur durch den berechneten Hashwert umfasst und/oder Bereiche des ursprünglichen Datenelements, die nicht durch den berechneten Hashwert überschrieben wurden mit anderen Daten, insbesondere randomisierten Daten (1577), insbesondere mehrfach, überschrieben werden.

19. Verfahren nach einem der Ansprüche 16 - 18, wobei in Schritt (b) auf Basis des berechneten Hashwertes ein zweites Datenelement berechnet wird, welches von dem zu löschenden Datenelement verschieden ist, und das zu löschende Datenelement durch das zweite Datenelement ersetzt wird.

20. **Verfahren zum Verifizieren von Daten innerhalb einer Datenstruktur (1601),** umfassend die folgenden Schritte:
a) Auswählen (V01) einer Instanz, welche mindestens ein Datenelement (1603a-d, 1703a-d) umfasst, aus einer Datenstruktur (1601, 1701),
b) Berechnen (V02a) mindestens eines Einzel-Hashwertes (1605a-d, 1705a, 1705b, 1705d) auf Basis eines ausgewählten Datenelements oder Auslesen (V02b) eines Einzel-Hashwertes (1705c-1, 1705c), welcher ein gelöschtes Datenelement (1703c-1, 1703c-2) repräsentiert,
c) Erzeugen (V03) mindestens eines Master-Hashwertes (1707) auf Basis der Einzel-Hashwerte,
d) Auslesen (V04) eines Referenz-Master-Hashwertes (1707r-1, 1707r-2) aus einem Medium oder System (1702), welches die Integrität der auf ihm gespeicherten Daten algorithmisch und/oder mathematisch absichert, oder aus einer Kopie von auf einem solchen Medium oder System gesicherten Daten,
e) Vergleichen (V05) des erzeugten Master-Hashwertes (1707) mit dem ausgelesenen Referenz-Master-Hashwert (1707r-2),
f) Feststellen (V06) eines Ergebnisses in Bezug auf die Integrität der Daten der ausgewählten Instanz, wobei,
wenn der Vergleich des erzeugten Master-Hashwertes (1707) mit dem ausgelesenen Referenz-Master-Hashwert (1707r-2) positiv ausfällt, das Nichtvorliegen einer Datenmanipulation festgestellt wird, oder
wenn der Vergleich des erzeugten Master-Hashwertes (1707) mit dem ausgelesenen Referenz-Master-Hashwert (1707r-2) nicht positiv ausfällt, das Vorliegen einer Datenmanipulation festgestellt wird, wobei das Ergebnis insbesondere zusätzliche Aussagen über den Ort der festgestellten Datenmanipulation enthalten kann.

21. Verfahren nach Anspruch 20, wobei das Medium oder System, welches die Integrität der auf ihm gespeicherten Daten algorithmisch und/oder mathematisch absichert, ein verteiltes Computersystem, insbesondere ein Blockchain-basiertes System, insbesondere ein Distributed Ledger, umfasst, wobei das verteilte Computersystem privat oder öffentlich zugänglich sein kann.

22. Verfahren nach Anspruch 20 oder 21, wobei der Schritt des Erzeugens (V03) eine Reduktion der Anzahl der Hashwerte, insbesondere eine rekursive oder sukzessive Reduktion, umfasst.

23. Verfahren nach einem der Ansprüche 20 - 22, wobei das Erzeugen (V03) eines Master-Hashwertes (1007i) außerdem auf Basis mindestens einer weiteren Instanz (1007h) geschieht.

24. Verfahren nach Anspruch 23, wobei die weitere Instanz (1007h) eine bereits in dem Medium oder System, welches die Integrität der auf ihm gespeicherten Daten algorithmisch und/oder mathematisch absichert, gesicherte Instanz (1007h) umfasst.

25. Verfahren nach Anspruch 24, wobei die bereits gesicherte Instanz (1007h) einen vorhergehenden oder älteren Hashwert oder Master-Hashwert (1007h) umfasst.

26. Verfahren nach einem der Ansprüche 20 - 25, wobei beim Schritt des Auslesens (V04) eines Referenz-Master-Hashwertes (1707r-1, 1707r-2) außerdem zusätzlich ein Zeitstempel ausgelesen wird und/oder die Datenelemente Zeitstempel umfassen.

27. Verfahren nach einem der Ansprüche 20 - 26, wobei der Schritt des Berechnens (V02) eines Hashwertes auf Basis einer Struktur, welche das Datenelement und ein weiteres Element, insbesondere einen Seed/Salt, umfasst, erfolgt.

28. **Verfahren zum systematischen Erhalt der Integrität einer Datenstruktur (301)** und ihrer Überprüfbarkeit, welches ein in regelmäßigen oder unregelmäßigen Zeitabständen wiederkehrend auszuführendes Verfahren zum Sichern von Daten nach einem der Ansprüche 1 - 15 umfasst.

29. **Computer, Computernetzwerk oder Computersystem,** insbesondere verteiltes Computersystem, welches eingerichtet ist, um
- ein Verfahren zum Sichern von Daten nach einem der Ansprüche 1 - 15,
- ein Verfahren zum Löschen eines Datenelements nach einem der Ansprüche 16 - 19,
- ein Verfahren zum Verifizieren von Daten nach einem der Ansprüche 20 - 27, und/oder
- ein Verfahren zum systematischen Erhalt der Integrität einer Datenstruktur und ihrer Überprüfbarkeit nach Anspruch 28 auszuführen.

30. **Verfahren zum Einrichten eines Computers, Computernetzwerks oder Computersystems,** umfassend ein Verteilen und/oder Übertragen von computerausführbaren Anweisungen, welche dazu geeignet sind, auf einem Computer die Ausführung
- eines Verfahrens zum Sichern von Daten nach einem der Ansprüche 1 - 15,
- eines Verfahrens zum Löschen eines Datenelements nach einem der Ansprüche 16 - 19,
- eines Verfahrens zum Verifizieren von Daten nach einem der Ansprüche 20 - 27, und/oder
- eines Verfahrens zum systematischen Erhalt der Integrität einer Datenstruktur und ihrer Überprüfbarkeit nach Anspruch 28 zu bewirken.

31. **Computerprogramm,** umfassend:
- ein Verfahren zum Erzeugen und/oder Sichern von Daten nach einem der Ansprüche 1 - 15,
- ein Verfahren zum Löschen eines Datenelements nach einem der Ansprüche 16 - 19,
- ein Verfahren zum Verifizieren von Daten nach einem der Ansprüche 20 - 27,
- ein Verfahren zum systematischen Erhalt der Integrität einer Datenstruktur und ihrer Überprüfbarkeit nach Anspruch 28, und/oder
- ein Verfahren zum Einrichten eines Computers, Computernetzwerks oder Computersystems nach Anspruch 30.

32. **Computerlesbares Medium,** umfassend computerausführbare Anweisungen, welche dazu geeignet sind, auf einem Computer die Ausführung
- eines Verfahren zum Erzeugen und/oder Sichern von Daten nach einem der Ansprüche 1 - 15,
- eines Verfahren zum Löschen eines Datenelements nach einem der Ansprüche 16 - 19,
- eines Verfahren zum Verifizieren von Daten nach einem der Ansprüche 20 - 27,
- eines Verfahren zum systematischen Erhalt der Integrität einer Datenstruktur und ihrer Überprüfbarkeit nach Anspruch 28, und/oder
- eines Verfahren zum Einrichten eines Computers, Computernetzwerks oder Computersystems nach Anspruch 30 zu bewirken.
